# EUROPEAN PATENT SPECIFICATION

(11) **EP 4 445 972 B1**
(45) Date of publication and mention of the grant of the patent: **13.05.2026**
(21) Application number: 23740569.1
(22) Date of filing: 09.01.2023
(51) Int. Cl.: A63F 13/25, G06T 11/00, G06T 1/20, G06T 11/20, G06T 11/60

(54) **SPECIAL EFFECT PROP GENERATION METHOD AND APPARATUS, PICTURE PROCESSING METHOD AND APPARATUS, AND ELECTRONIC DEVICE**
VERFAHREN UND VORRICHTUNG ZUR ERZEUGUNG VON SPEZIALEFFEKT-PROPS, BILDVERARBEITUNGSVERFAHREN UND -VORRICHTUNG UND ELEKTRONISCHE VORRICHTUNG
PROCÉDÉ ET APPAREIL DE GÉNÉRATION D'ACCESSOIRE D'EFFET SPÉCIAL, PROCÉDÉ ET APPAREIL DE TRAITEMENT D'IMAGE, ET DISPOSITIF ÉLECTRONIQUE

(30) Priority: 11.01.2022 CN 202210028388
(43) Date of publication of application: 16.10.2024
(73) Proprietor: Lemon Inc., Grand Cayman, KY1-1205 (KY)
(72) Inventor: DAI, Zeng, Los Angeles, California 90066 (US)
(74) Representative: Marks & Clerk LLP
(86) International application number: PCT/SG2023/050016
(87) International publication number: WO 2023/136777

(56) References cited:
- EP-A2- 0 528 631
- CN-A- 108 287 718
- CN-A- 108 287 718
- CN-A- 110 147 231
- CN-A- 110 147 231
- CN-A- 110 704 043
- CN-A- 110 704 043
- CN-A- 113 709 549
- CN-A- 113 709 549

## Description

### TECHNICAL FIELD

Embodiments of the present disclosure relate to the field of computer technologies and, for example, a method and apparatus for generating an effect, a method and apparatus for processing an image, an electronic device, and a storage medium.

### BACKGROUND

In the related art, R&D personnel need to create a new prop by editing codes, and after the prop is created, the R&D personnel check the effect of the prop by means of trial operation. However, the prop creation process in the related art is cumbersome, and problems existing in

the prop cannot be found immediately, resulting in a relatively long time for prop creation. Some prior art is known from CN 110 147 231A and EP 0 528 631A.

### SUMMARY

Embodiments of the present disclosure provide a method and apparatus for generating an effect, a method and apparatus for processing an image, and an electronic device, so as to simplify a prop creation process and shorten the time spent on prop creation.

In a first aspect, an embodiment of the present disclosure provides a method for generating an effect. The method includes the steps described below.

An effect editing page is displayed and a first image is acquired, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited.

In response to an editing operation, the flow information of the prop to be edited is edited and the second image displayed in the effect display region is updated.

In response to an effect generation operation, a target effect is generated according to edited target prop flow information.

In a second aspect, an embodiment of the present disclosure further provides a method for processing an image. The method includes the steps described below.

An image to be processed and target prop flow information of a target effect are acquired, where the target prop flow information is obtained by editing flow information of a prop to be edited in an effect editing page, and in an editing process, the effect editing page displays a second image obtained by processing a first image according to the flow information of the prop to be edited.

The image to be processed is processed by using the target effect.

When the processing is completed and according to an arrangement order of multiple nodes in the target prop flow information, a rendering instruction packet is sent to a graphics processing unit (GPU) to instruct the GPU to render an output image of each node and obtain a processed target image, where the rendering instruction packet includes rendering instructions of the multiple nodes.

In a third aspect, an embodiment of the present disclosure provides an apparatus for generating an effect. The apparatus includes a page display module, an editing module, and a prop generation module.

The page display module is configured to display an effect editing page and acquire a first image, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited.

The editing module is configured to, in response to an editing operation, edit the flow information of the prop to be edited and update the second image displayed in the effect display region.

The prop generation module is configured to, in response to an effect generation operation, generate a target effect according to edited target prop flow information.

**In** a fourth aspect, an embodiment of the present disclosure further provides an apparatus for processing an image. The apparatus includes an image acquisition module, an image processing module, and an instruction sending module.

The image acquisition module is configured to acquire an image to be processed and target prop flow information of a target effect, where the target prop flow information is obtained by editing flow information of a prop to be edited in an effect editing page, and in an editing process, the effect editing page displays a second image obtained by processing a first image according to the flow information of the prop to be edited.

The image processing module is configured to process the image to be processed by using the target effect.

The instruction sending module is configured to, when the processing is completed and according to an arrangement order of multiple nodes in the target prop flow information, send a rendering instruction packet to a graphics processing unit (GPU) to instruct the GPU to render an output image of each node and obtain a processed target image, where the rendering instruction packet includes rendering instructions of the multiple nodes.

In a fifth aspect, an embodiment of the present disclosure further provides an electronic device. The electronic device includes at least one processor and a memory configured to store at least one program.

The at least one program is executed by the at least one processor to cause the at least one processor to perform the method for generating a prop or the method for processing an image according to the embodiments of the present disclosure.

In a sixth aspect, an embodiment of the present disclosure further provides a computer-readable storage medium on which a computer program is stored, where the program is executed by a processor to cause the processor to perform the method for generating a prop or the method for processing the image according to the embodiments of the present disclosure.

In a seventh aspect, an embodiment of the present disclosure further provides a computer program product, where the computer program product, when executed by a computer, causes the computer to perform the method for generating a prop or the method for processing the image according to the embodiments of the present disclosure.

### BRIEF DESCRIPTION OF DRAWINGS

The same or similar reference numerals throughout the drawings denote the same or similar elements. It is to be understood that the drawings are illustrative and that originals and elements are not necessarily drawn to scale.
FIG. 1 is a flowchart of a method for generating an effect according to an embodiment of the present disclosure;
FIG. 2 is a schematic diagram of an effect editing page according to an embodiment of the present disclosure;
FIG. 3 is a flowchart of another method for generating an effect according to an embodiment of the present disclosure;
FIG. 4 is a flowchart of a method for processing an image according to an embodiment of the present disclosure;
FIG. 5 is a flowchart of another method for processing an image according to an embodiment of the present disclosure;
FIG. 6 is a block diagram of an apparatus for generating an effect according to an embodiment of the present disclosure;
FIG. 7 is a block diagram of an apparatus for processing an image according to an embodiment of the present disclosure; and
FIG. 8 is a structural diagram of an electronic device according to an embodiment of the present disclosure.

### DETAILED DESCRIPTION

It is to be understood that the various steps recorded in the method embodiments of the present disclosure may be performed in a different order, and/or in parallel. Additionally, the method embodiments may include additional steps and/or omit the execution of illustrated steps. The scope of the present disclosure is not limited in this respect.

As used herein, the term "include" and variations thereof are intended to be inclusive, that is, "including, but not limited to". The term "according to" is "at least partially according to". The term "one embodiment" means "at least one embodiment"; the term "another embodiment" means "at least one another embodiment"; and the term "some embodiments" means "at least some embodiments". Related definitions of other terms are given hereinafter.

It is to be noted that references to "first", "second" and the like in the present disclosure are merely intended to distinguish one from another apparatus, module, or unit and are not intended to limit the order or interrelationship of the functions performed by the apparatus, module, or unit.

It is to be noted that references to modifications of "one" or "a plurality" mentioned in the present disclosure are intended to be illustrative and not limiting; those skilled in the art should understand that "one" or "a plurality" should be understood as "at least one" unless clearly expressed in the context.

Names of messages or information exchanged between multiple apparatuses in embodiments of the present disclosure are used for an illustrative purpose and are not to limit the scope of such messages or information.

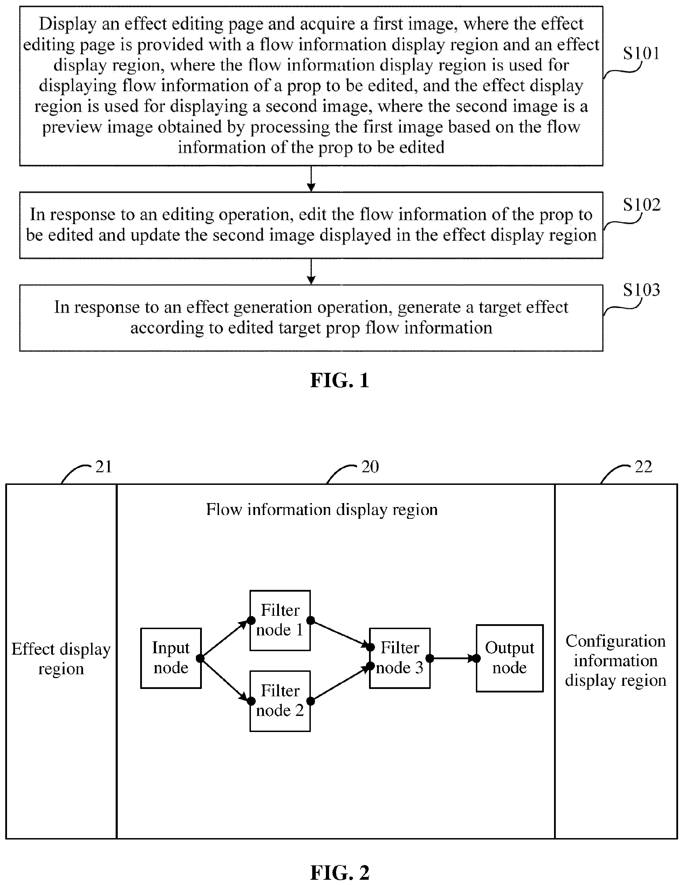

FIG. 1 is a flowchart of a method for generating an effect according to an embodiment of the present disclosure. The method may be performed by an apparatus for generating an effect which may be implemented by software and/or hardware and may be configured in an electronic device. Typically, the apparatus may be configured in a computer device. The method for generating an effect provided in the embodiment of the present disclosure is applicable to a scenario of producing an effect. As shown in FIG. 1, the method for generating an effect provided in this embodiment may include the steps described below.

In S101, an effect editing page is displayed and a first image is acquired, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited.

The effect editing page may be a page for displaying the prop flow information of the effect for the user to edit the effect, such as a page for the user to create a new effect or modify the existing effect. As shown in FIG. 2, a flow information display region 20 and an effect display region 21 may exist in the effect editing page. The flow information display region 20 may be used for displaying flow information of a prop to be edited and edited target prop flow information. The effect display region 21 may be used for displaying, in real time, a preview effect of the effect corresponding to the flow information of the prop to be edited after the editing by the user in the editing process of the user.

The flow information of the prop to be edited may be understood as the prop flow information currently edited by the user in the effect editing page, which may be information used for identifying an execution flow of the effect, such as text information, image information or a flowchart used for identifying the execution flow of the effect.

To simplify an operation required by the user in the editing process, optionally, as shown in FIG. 2, the flow information of the prop to be edited may be presented in a form of the flowchart, at least two nodes may be provided in the flowchart, and each node has at least one input connection point and/or at least one output connection point. Here, the flowchart may be a directed acyclic graph, and the flowchart may be provided with one input node and one output node and may be provided with a filter node for performing corresponding filter processing on a received image, such as an operation filter node for processing the texture of the image, a convolution filter node for convolution processing, and/or a matting repair filter node for repairing an incomplete image. The filter node may have both the input connection point and the output connection point. One input connection point may be connected to one output connection point and is used for inputting the image information outputted by the corresponding output connection point to the corresponding node for processing. One output connection point may be connected to at least one input connection point and is used for sending the image information processed by the corresponding node to the corresponding input connection point.

The first image may be an initial image that is not processed by using the flow information of the prop to be edited, that is, the initial image that is not processed according to the flow information of the prop to be edited. The first image may be a video image, an animation image or a picture image imported by the user or preset by a client and used as an input image of the input node in the flowchart of the prop to be edited. Correspondingly, the second image may be the preview image obtained by processing the first image according to the flow information of the prop to be edited displayed in the effect editing page, for example, an image obtained by rendering the image information outputted by the output node in the flowchart of the prop to be edited.

Exemplarily, the electronic device may, in response to an editing page display operation by the user (such as the R&D personnel), acquire the first image, display the effect editing page, display the flow information of the prop to be edited in the flow information display region of the effect editing page, and display the second image obtained by processing the first image according to the flow information of the prop to be edited displayed at a current moment in the effect display region of the effect editing page.

The flow information of the prop to be edited displayed in the form of the flowchart is used as an example. In response to a new creation operation of the user, the electronic device may create a flowchart of the prop to be edited in which only the input node and the output node are included and the input node and the output node are connected by a connection line segment, display the flowchart of the prop to be edited in the flow information display region of the effect editing page, and display the second image obtained by processing the first image according to the flowchart of the prop to be edited in the effect display region of the effect editing page. In this case, since the flowchart of the prop to be edited includes only the input node and the output node, but does not include the filter node, the second image outputted by the output node is still the original first image.

In addition, in response to an import operation of the user, the electronic device may acquire the flowchart imported by the user as the flowchart of the prop to be edited, display the flowchart of the prop to be edited in the flow information display region of the effect editing page, and display the second image obtained by processing the first image according to the flowchart of the prop to be edited in the effect display region of the effect editing page.

In S102, in response to an editing operation, the flow information of the prop to be edited is edited and the second image displayed in the effect display region is updated.

The editing operation may be an operation of editing the flow information of the prop to be edited, such as an addition operation for adding a flow step to the flow information of the prop to be edited, a deletion operation for deleting at least one flow step in the flow information of the prop to be edited, an order adjustment operation for adjusting an execution order of the flow steps in the flow information of the prop to be edited, and/or a step editing operation for editing content of the flow steps in the flow information of the prop to be edited.

Exemplarily, when the user wants to edit the flow information of the prop to be edited displayed in the effect editing page, the user may perform the corresponding editing operation, such as the addition operation, the deletion operation, the order adjustment operation or the step editing operation. Correspondingly, when receiving the editing operation of the user, the electronic device may edit the flow information of the prop to be edited according to the editing operation. For example, the electronic device adds a new flow step in the flow information of the prop to be edited in response to the addition operation of the user, deletes the corresponding flow step in the flow information of the prop to be edited in response to the deletion operation of the user, adjusts the execution order of some steps in the flow information of the prop to be edited in response to the order adjustment operation of the user, or modify the content of the flow steps in the flow information of the prop to be edited in response to the step editing operation of the user. Moreover, after the electronic device edits the flow information of the prop to be edited according to the editing operation of the user each time, the electronic device re-processes the first image according to the edited flow information of the prop to be edited to obtain a new second image, and displays the new second image in the effect display region of the effect editing page.

In addition, the user may view the first image through an original image viewing operation. For example, when the user wants to view the first image, the user may move the cursor to the effect display region or trigger an original image control. Correspondingly, when receiving the original image viewing operation of the user, the electronic device may display the first image, for example, switch the second image displayed in the effect display region to the first image, or display an original image window and display the first image in the original image window for the user to compare and view the first image and the second image.

In this embodiment, the flow information of the prop to be edited is edited so as to complete the editing of the effect, codes do not need to be written, and a processing effect of the effect on the image can be viewed in real time in the editing process so that the difficulty of creating and editing the effect can be simplified, the efficiency of creating and editing the effect is improved, the time spent by the user on creating and editing the effect is reduced, and the user experience is improved.

In S103, in response to an effect generation operation, a target effect is generated according to edited target prop flow information.

The effect generation operation may be an operation of generating the effect by using the edited prop flow information, such as an operation of triggering an effect generation control. Correspondingly, the target prop flow information may be prop flow information obtained when the editing of the flow information of the prop to be edited is completed. The target effect may be an effect generated according to target flow information of the prop to be edited.

Exemplarily, after the user finishes editing the flow information of the prop to be edited, when the user wants to generate the effect by using the edited target prop flow information, the user may perform the effect generation operation. Correspondingly, when receiving the effect generation operation of the user, the electronic device may acquire the target prop flow information edited by the user, generate the target effect according to the target prop flow information, for example, serialize the target prop flow information into a configurable prop format (such as a JSON format), and get the target effect.

In addition, the user may save the edited flow information of the prop to be edited by performing a saving operation. For example, when the user wants to save the currently obtained prop flow information in the editing process or after the editing is completed, the user may perform the saving operation, for example, trigger a saving control. Correspondingly, when receiving the saving operation of the user, the electronic device may save the prop flow information currently displayed in the effect editing page, for example, save a prop flowchart currently displayed in the effect editing page in a form of a directed acyclic graph.

In an embodiment, the method for generating an effect provided in this embodiment may further include displaying an input image of the corresponding input connection point when the cursor moves to a display region of any input connection point; and/or displaying an output image of the corresponding output connection point when the cursor moves to a display region of any output connection point.

In the preceding embodiment, not only can the user view in real time the second image obtained by processing the first image according to the currently displayed flow information of the prop to be edited in the effect display region, that is, not only can the user view in real time a final effect of processing the first image according to the currently displayed flow information of the prop to be edited, but also the user can view an intermediate effect of processing the first image according to the currently displayed flowchart to be edited, for example, view images inputted and/or outputted by the nodes in a process of processing the first image so that a processing effect of each node is clarified, and whether the corresponding node in the flowchart of the prop to be edited needs to be edited is quickly determined, thereby reducing the difficulty of editing the effect and improving the efficiency of creating the effect.

Exemplarily, when the user wants to view the input image of a certain node in the flow information of the prop to be edited, the user may move the cursor to a display region of the input connection point of the node. Correspondingly, when detecting that the cursor moves to a display region of a certain input connection point in the flow information display region, the electronic device may display the input image received by the input connection point, for example, display the input image obtained by rendering input image information received by the input connection point. Exemplarily, when the user wants to view the output image of a certain node in the flow information of the prop to be edited, the user may move the cursor to a display region of the output connection point of the node. Correspondingly, when detecting that the cursor moves to a display region of a certain output connection point in the flow information display region, the electronic device may display the output image received by the output connection point, for example, display the output image obtained by rendering output image information of the output connection point.

In the preceding embodiment, a display manner of the output image of the input connection point and the input image of the input connection point may be set flexibly. For example, the input image/output image of the corresponding connection point may be displayed in an image display region of the effect editing page; or an image display region is created on a side of the corresponding connection point, and the input image/output image is displayed in the image display region; the input image/output image may also be displayed in a form of a floating window, for example, an image display window may be displayed on a side of the corresponding connection point, and the input image/output image of the connection point is displayed in the image display window, which is not limited in this embodiment.

This embodiment provides the method for generating an effect. The method includes displaying an effect editing page and acquiring a first image, where the effect editing page is provided with a flow information display region and an effect display region, where the flow information display region is used for displaying flow information of a prop to be edited, and the effect display region is used for displaying a second image obtained by processing the first image according to the flow information of the prop to be edited; in response to an editing operation, editing the flow information of the prop to be edited and updating the second image displayed in the effect display region; and in response to an effect generation operation, generating a target effect according to edited target prop flow information. In this embodiment, the preceding technical solutions are adopted. In this manner, the prop flow information is edited so as to edit the effect, and a preview effect of the edited prop flow information is displayed in real time in the editing process so that the difficulty of creating and editing the effect can be simplified, the time spent by a user on creating and editing the effect is shortened, and the user experience is improved.

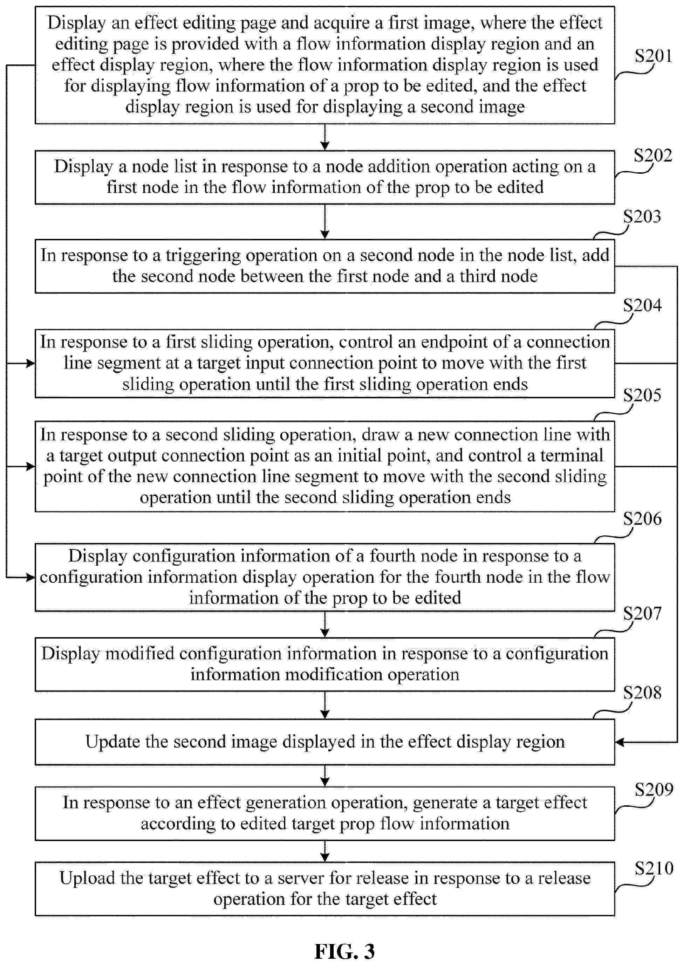

FIG. 3 is a flowchart of another method for generating an effect according to an embodiment of the present disclosure. Solutions in this embodiment may be combined with at least one optional solution in the preceding embodiment. Optionally, the step of in response to the editing operation, editing the flow information of the prop to be edited includes displaying a node list in response to a node addition operation acting on a first node in the flow information of the prop to be edited; and in response to a triggering operation on a second node in the node list, adding the second node between the first node and a third node, where the third node is an adjacent node of the first node.

Optionally, the step of in response to the editing operation, editing the flow information of the prop to be edited includes in response to a first sliding operation, controlling an endpoint of a connection line segment at a target input connection point to move with the first sliding operation until the first sliding operation ends, where the first sliding operation starts from the target input connection point; and/or in response to a second sliding operation, drawing a new connection line segment with a target output connection point as an initial point and controlling a terminal point of the new connection line segment to move with the second sliding operation until the second sliding operation ends, where the second sliding operation starts from the target output connection point.

Optionally, the step of in response to the editing operation, editing the flow information of the prop to be edited includes displaying configuration information of a fourth node in response to a configuration information display operation for the fourth node in the flow information of the prop to be edited; and displaying modified configuration information in response to a configuration information modification operation.

Optionally, after the target effect is generated according to the edited target prop flow information, the method further includes uploading the target effect to a server for release in response to a release operation for the target effect.

Correspondingly, as shown in FIG. 3, the method for generating an effect provided in this embodiment may include the steps described below.

In S201, an effect editing page is displayed and a first image is acquired. S202, S204, S205 or S206 is performed. The effect editing page is provided with a flow information display region and an effect display region. The flow information display region is used for displaying flow information of a prop to be edited. The flow information of the prop to be edited is presented in a form of a flowchart. The flowchart is provided with at least two nodes, and each node has at least one input connection point and/or at least one output connection point. The effect display region is used for displaying a second image, where the second image is a preview image obtained by processing the first image according to the flow information of the prop to be edited.

In S202, a node list is displayed in response to a node addition operation acting on a first node in the flow information of the prop to be edited.

The node addition operation may be an operation of instructing the electronic device to display the node list to add a filter node in the flow information of the prop to be edited. Correspondingly, the first node may be a node to which the filter node that the user wants to add is connected and the first node may be any node in the flow information of the prop to be edited. The node list may be used for displaying preset filter nodes. The filter nodes may include a basic filter node and/or a composite filter node. The basic filter node may be a node with the smallest granularity, and the composite filter node may be a filter node obtained by combining multiple basic filter nodes according to a certain flow sequence.

Exemplarily, when the user wants to add a filter node at a position adjacent to a certain node of the flow information of the prop to be edited, the user may perform the node addition operation for the node. Correspondingly, when receiving the node addition operation, the electronic device may display the node list and display the preset filter nodes in the node list, for example, display preset node identification information of the filter nodes in the node list for the user to choose from.

In an embodiment, the node addition operation includes a mouse right-click operation acting on the first node. That is, the user may instruct the electronic device to display the node list by clicking the right mouse button. For example, when the user wants to add a filter node between a certain node and the adjacent node thereof, the user can may move the cursor to a display position of the node and trigger the right mouse button. Correspondingly, when detecting that the user triggers the right mouse button, the electronic device may use a node at a current display position of the cursor as the first node, determine that the node addition operation for the first node is received, and display the node list in response to the node addition operation.

**In** another embodiment, the node addition operation includes a triggering operation acting on a list control of the first node, and before the node list is displayed in response to the node addition operation acting on the first node in the flow information of the prop to be edited, the method further includes displaying the list control of the first node when a cursor moves to a display region of the output connection point of the first node.

**In** the preceding embodiment, the user may instruct the electronic device to display the node list by triggering the list control.

The list control may be a control used for instructing the electronic device to display the node list. The display region of the output connection point may be understood as a display region where the output connection point is located, that is, a display position where the output connection point is.

Exemplarily, when the user wants to instruct the electronic device to display the list control, the user may move the cursor to the display region of the output connection point of the node. When detecting that the cursor moves to the display region of the output connection point of a certain node, the electronic device may use the node as the first node and display the list control of the first node. Therefore, when the user wants to add a filter node between the first node and the adjacent node thereof, the user may trigger the list control. Correspondingly, when detecting that the user triggers the list control of the first node, the electronic device may determine that the node addition operation is received and display the node list in response to the node addition operation.

In addition, when the cursor moves to a display region of the input connection point of a certain node, the electronic device may display or not display the list control of the node, which is not limited in this embodiment.

It is to be noted that when the node addition operation for different nodes is received, the filter nodes displayed in the node list may be the same or different. For example, when the node addition operation for different nodes is received, all preset filter nodes may be displayed in the node list; or only filter nodes that match the current node are displayed, for example, only filter nodes that can be connected to the current node are displayed.

In S203, in response to a triggering operation on a second node in the node list, the second node is added between the first node and a third node, and S208 is performed, where the third node is an adjacent node of the first node.

The second node may be a filter node triggered by the user in the node list. The third node may be a node adjacent to the first node in the flow information of the prop to be edited before the second node is added, such as a node where the input connection point is connected to the output connection point of the first node, and/or a node where the output connection point is connected to the input connection point of the first node.

Exemplarily, when the user wants to add a certain node to the flow information of the prop to be edited, the user may trigger the node displayed in the node list, for example, trigger the node identification information of the node displayed in the node list. Correspondingly, when detecting a certain node displayed in the user-triggered node list, the electronic device may use the node as the second node and add the second node between the first node and one of adjacent nodes thereof (that is, the third node).

In this embodiment, an addition position of the second node may be set as required. For example, the second node may be directly added between a certain node where the input connection point is connected to the output connection point of the first node and the first node, or the second node is added between a certain node where the output connection point is connected to the input connection point of the first node and the first node. To make the addition position of the second node more in line with the actual addition intention of the user and reduce the case where the user needs to adjust the position of the second node in the flow information of the prop to be edited again, in this embodiment, optionally, when the node list is displayed in response to the mouse right-click operation of the user, or when the list control of the first node is displayed in response to an operation of moving the cursor to the display region of the output connection point of the first node and the node list is displayed in response to an operation of the user triggering the list control, the second node is added between a certain node where the input connection point is connected to the output connection point of the first node and the first node; when the list control of the first node is displayed in response to an operation of moving the cursor to the display region of the input connection point of the fist node and the node list is displayed in response to an operation of the user triggering the list control, the second node is added between a certain node where the output connection point is connected to the input connection point of the first node and the first node.

In an embodiment, when the second node is added between a certain node (that is, the third node) where the input connection point is connected to the output connection point of the first node and the first node, a connection line segment between the first node and the node (the third node) may be deleted, the output connection point of the first node may be connected to the input connection point of the second node, and the output connection point of the second node may be connected to the input connection point of the node. In this case, optionally, the step of adding the second node between the first node and the third node includes adding the second node in the flow information display region, deleting a first connection line segment displayed in the flow information display region, and drawing a second connection line segment and a third connection line segment, where the first connection line segment is used for connecting the output connection point of the first node to the input connection point of the third node, the second connection line segment is used for connecting the output connection point of the first node to the input connection node of the second node, and the third connection line segment is used for connecting the output connection point of the second node to the input connection point of the third node.

In S204, in response to a first sliding operation, an endpoint of a connection line segment at a target input connection point is controlled to move with the first sliding operation until the first sliding operation ends, and S208 is performed, where the first sliding operation starts from the target input connection point.

The first sliding operation may be a sliding operation starting from the input connection point of a certain node displayed in the flow information of the prop to be edited, that is, a sliding operation whose sliding initial point is located in the display region of the input connection point. Correspondingly, the target input connection point may be an input connection point from which the first sliding operation starts.

In this embodiment, through a sliding operation starting from a certain input connection point, the user may adjust a connection position of a connection line segment connected to the input connection point.

For example, when the user wants to adjust a connection position of a certain connection line segment displayed in the flow information of the prop to be edited, the user may perform sliding from the input connection point where a terminal point of the connection line segment is located, for example, select the terminal point of the connection line segment and drag the terminal point to move. Correspondingly, when detecting a sliding operation starting from a certain input connection point in the flow information of the prop to be edited, the electronic device may use the input connection point as a target input connection point and control a terminal point of a certain connection line segment (for example, a connection line segment selected by the user) connected to the target input connection point to move with the sliding operation of the user until the user finishes performing sliding. If the user finishes performing sliding, the terminal point moves to a display position of a certain input connection point in the flowchart of the prop to be edited, and the terminal point of the connection line segment may be connected to the input connection point.

In S205, in response to a second sliding operation, a new connection line segment with a target output connection point as an initial point is drawn, and a terminal point of the new connection line segment is controlled to move with the second sliding operation until the second sliding operation ends, and S208 is performed, where the second sliding operation starts from the target output connection point.

The second sliding operation may be a sliding operation starting from the output connection point of a certain node displayed in the flow information of the prop to be edited, that is, a sliding operation whose sliding initial point is located in the display region of the output connection point. Correspondingly, the target output connection point may be an output connection point from which the second sliding operation starts.

In this embodiment, through a sliding operation starting from a certain output connection point, the user may draw a new connection line segment starting from the output connection point.

For example, when the user wants to draw a connection line segment connecting an output connection point of a certain node and an input connection point of another node, that is, when the user wants to input the image information outputted by the output connection point to another node for processing, the user may perform sliding from the output connection point. Correspondingly, when detecting a sliding operation starting from a certain output connection point in the flow information of the prop to be edited, the electronic device may draw a new connection line segment with the output connection point as an initial point and control a terminal point of the new connection line segment to move with the sliding operation of the user until the user finishes performing sliding. If the user finishes performing sliding, the terminal point moves to a display position of a certain input connection point in the flowchart of the prop to be edited, and the terminal point of the new connection line segment may be connected to the input connection point.

In S206, configuration information of a fourth node is displayed in response to a configuration information display operation for the fourth node in the flow information of the prop to be edited.

The configuration information display operation may be a triggering operation that instructs the electronic device to display configuration information of a certain node in the flow information of the prop to be edited, such as a mouse left-click operation acting on the node or a triggering operation acting on a configuration control of the node. Correspondingly, the fourth node may be a node on which the configuration information display operation acts, and the node may be any node displayed in the flow information display region, optionally, a filter node displayed in the flow information display region.

Exemplarily, when the user wants to view or modify the configuration information of a certain node in the flow information of the prop to be edited, the user may perform a configuration information display operation for the node. Correspondingly, when receiving the configuration information display operation for a certain node in the flow information of the prop to be edited, the electronic device may display the configuration information of the node, for example, configuration information of the node displayed in a configuration information display region 22 of the effect editing page (as shown in FIG. 2) and/or the configuration information of the node displayed in a configuration information window displayed on an upper layer of the flow information display region 20.

In an embodiment, the configuration information display operation includes a mouse left-click operation for the fourth node. That is, the user may instruct the electronic device to display the configuration information of a certain node by clicking the left mouse button. For example, when the user wants to view or modify the configuration information of a certain node, the user may move the cursor to the display position of the node and trigger the left mouse button. Correspondingly, when detecting that the user triggers the left mouse button, the electronic device may use a node at a current display position of the cursor as the fourth node, determine that the configuration information display operation for the fourth node is received, and display configuration information of the fourth node in response to the configuration information display operation, for example, display the configuration information of the node in the configuration information display region of the effect editing page.

In another embodiment, the configuration information display operation includes a triggering operation acting on a configuration control of the fourth node, and before the configuration information of the fourth node is displayed in response to the configuration information display operation for the fourth node in the flow information of the prop to be edited, the method further includes displaying the configuration control of the fourth node in response to a mouse left-click operation for the fourth node.

In the preceding embodiment, the user may instruct the electronic device to display configuration information of the corresponding node by triggering the configuration control. The configuration control may be a control used for instructing the electronic device to display the configuration information of the corresponding node.

Exemplarily, when the user wants to instruct the electronic device to display a configuration control of a certain node, the user may move the cursor to the display position of the node and click the left mouse button. When detecting that the user clicks the left mouse button, the electronic device may use the node as the fourth node and display the configuration control of the fourth node. Therefore, the user can trigger the configuration control when viewing or modifying the configuration information of the fourth node. Correspondingly, when detecting that the user triggers the configuration control of the fourth node, the electronic device may determine that the configuration information display operation for the fourth node is received, and display the configuration information of the fourth node in response to the configuration information display operation, for example, display the configuration information window on the upper layer of the flow information display region and display the configuration information of the node in the configuration information window.

In S207, modified configuration information is displayed in response to a configuration information modification operation.

The configuration information modification operation may be an operation of modifying configuration information of a certain node (that is, the fourth node) in the flow information of the prop to be edited, for example, an operation of modifying a node name, a node type and/or a parameter value of the node in the configuration information.

Exemplarily, the electronic device displays the configuration information of the fourth node. Therefore, the user may modify the configuration information of the fourth node through a corresponding configuration information modification operation. Correspondingly, when receiving the configuration information modification operation of the user, the electronic device may modify the configuration information of the fourth node according to the configuration information modification operation and display the modified configuration information.

In S208, the second image displayed in the effect display region is updated.

In S209, in response to an effect generation operation, a target effect is generated according to edited target prop flow information.

In S210, the target effect is uploaded to a server for release in response to a release operation for the target effect.

In this embodiment, according to the release operation of the user, a prop created by the user is released so that other users can use the prop created by the user for image processing.

Exemplarily, after the target effect is generated, the user may further perform the release operation, for example, trigger a release control of the target effect. Correspondingly, when detecting the release operation of the user for the target effect, the electronic device may upload the target effect to the server for release.

In addition, after the release of the target effect is completed, the user (that is, a releaser of the target effect) or other users other than the user may use the target effect for image processing and may score the target effect so that other users determine whether to use the target effect for image processing according to the score.

In the method for generating an effect provided in this embodiment, a new effect is created or the existing effect is modified without the need for editing codes, thereby simplifying processes of creating and modifying the effect and improving the enthusiasm of the user to release the effect.

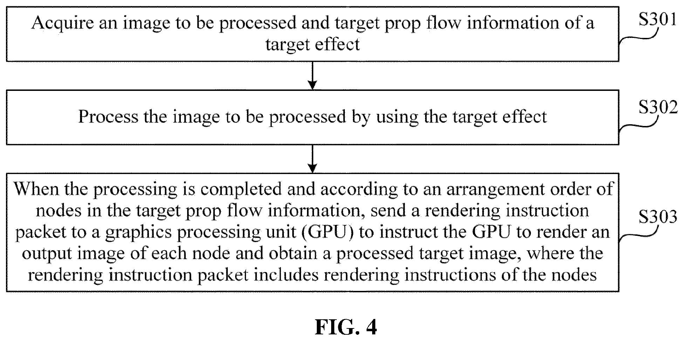

FIG. 4 is a flowchart of a method for processing an image according to an embodiment of the present disclosure. The method may be performed by an apparatus for processing an image which may be implemented by software and/or hardware and may be configured in an electronic device. Typically, the apparatus may be configured in a mobile phone or a tablet computer. The method provided in the embodiment of the present disclosure is applicable to a scene in which an effect is used for processing an image to be processed. As shown in FIG. 4, the method provided in this embodiment may include the steps described below.

In S301, an image to be processed and target prop flow information of a target effect are acquired, where the target prop flow information is obtained by editing flow information of a prop to be edited in an effect editing page, and in an editing process, the effect editing page displays a second image obtained by processing a first image according to the flow information of the prop to be edited.

The target effect may be an effect that the user wants to use for image processing. Correspondingly, the image to be processed may be an image that needs to be processed by using the target effect, such as a video image to be processed, an animation image to be processed or a picture image to be processed. The target prop flow information may be the prop flow information of the target effect, and the prop flow information may be provided with multiple nodes, such as an input node, an output node and at least one filter node, and may be used for identifying an execution flow of the target effect.

Exemplarily, the image that the user wants to process may be acquired as the image to be processed, the effect selected by the user is used as the target effect, and the prop flow information of the target effect is acquired as the target prop flow information.

In S302, the image to be processed is processed by using the target effect.

In this embodiment, after the image to be processed and the target prop flow information of the target effect are acquired, the image to be processed may be processed by using the target effect. For example, image information of the image to be processed is inputted to an input node of the target effect so that the received image information is sequentially processed by using the nodes according to a processing flow identified by the target prop flow information, and target image information outputted by an output node of the target effect is acquired.

In S303, when the processing is completed, a rendering instruction packet is sent to a graphics processing unit (GPU) to instruct the GPU to render the output image of each node according to an arrangement order of multiple nodes in the target prop flow information and obtain a processed target image, where the rendering instruction packet includes rendering instructions of the multiple nodes.

In this embodiment, instead of submitting the rendering instruction of the node to the GPU immediately after each node finishes processing the received image information separately, the rendering instructions of the multiple nodes are submitted to the GPU at the same time after the image to be processed is processed by using the target effect, for example, after the output node outputs the processed target image information. In this manner, the rendering of the processed target image can be completed without submitting the rendering instructions for multiple times, thereby simplifying an image processing process and reducing running resources occupied by the image processing process.

The rendering instruction packet may include the rendering instructions of the filter nodes in the target effect and may include the rendering instruction of the input node and the rendering instruction of the output node in the target effect. The rendering instruction of a certain node may be used for instructing the GPU to render the output image of the node according to the output image information of the node.

Exemplarily, after the target image information outputted by the output node is received, the multiple nodes in the target effect may be controlled to generate the rendering instructions, or the rendering instruction generated by the corresponding node may be acquired after each node finishes processing the received image information, and the rendering instruction packet is generated according to the rendering instructions of the multiple nodes and submitted to the GPU. Therefore, after receiving the rendering instruction packet, the GPU may render the output image of the node according to the rendering instruction of each node according to the arrangement order of the multiple nodes in the target prop flow information so that the output image of each node is obtained, and then the target image obtained by processing the image to be processed is obtained.

In the method for processing the image provided in this embodiment, an image to be processed and target prop flow information of a target effect are acquired, where the target prop flow information is obtained by editing flow information of a prop to be edited in an effect editing page, and in an editing process, the effect editing page displays a second image obtained by processing a first image according to the flow information of the prop to be edited; the image to be processed is processed by using the target effect; and when the processing is completed, a rendering instruction packet is sent to a GPU to instruct the GPU to render the output image of each node according to an arrangement order of the multiple nodes in the target prop flow information and obtain a processed target image, where the rendering instruction packet includes rendering instructions of the multiple nodes. In this embodiment, the preceding technical solutions are adopted. In this manner, the rendering instructions are sent to the GPU at the same time after all the multiple nodes finish processing the received image information, thereby simplifying the image processing process and reducing the running resources occupied by the image processing process.

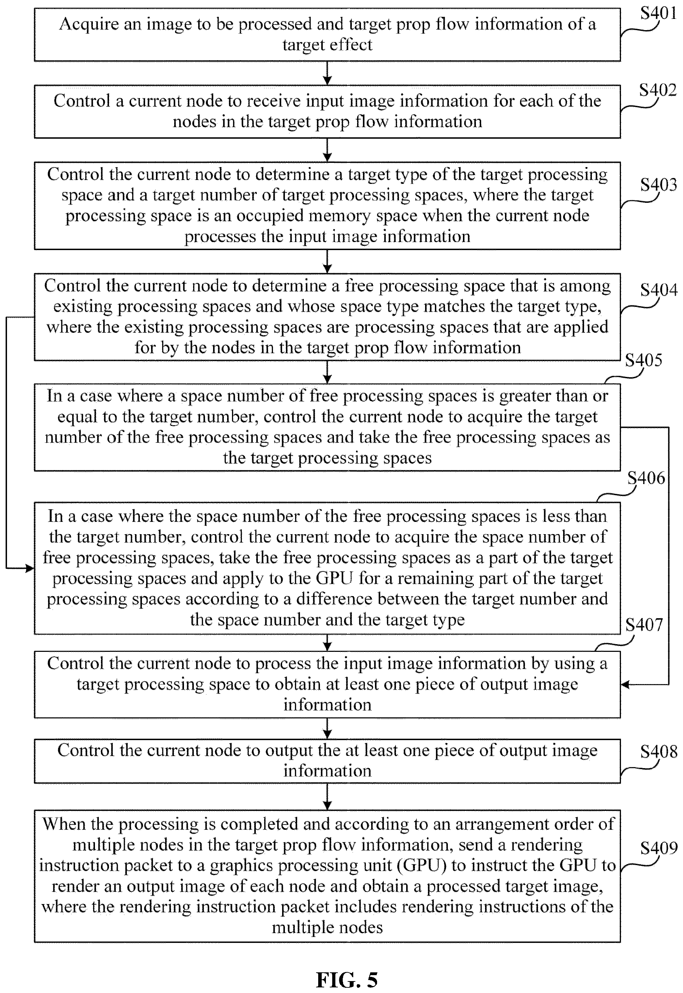

FIG. 5 is a flowchart of another method for processing an image according to an embodiment of the present disclosure. Solutions in this embodiment may be combined with at least one optional solution in the preceding embodiment. Optionally, the step of processing the image to be processed by using the target effect includes controlling a current node to receive input image information for each of the nodes in the target prop flow information; controlling the current node to process the input image information by using a target processing space, so as to obtain at least one piece of output image information, where the target processing space is an occupied memory space when the current node processes the input image information; and controlling the current node to output the at least one piece of output image information.

Optionally, before the current node is controlled to process the input image information by using the target processing space, the method includes controlling the current node to determine a target type of the target processing space and a target number of target processing spaces; controlling the current node to determine a free processing space that is among existing processing spaces and whose space type matches the target type, where the existing processing spaces are processing spaces that are applied for by the multiple nodes in the target prop flow information; in a case where a space number of free processing spaces is greater than or equal to the target number, controlling the current node to acquire the target number of the free processing spaces and taking the free processing spaces as the target processing spaces of the current node; and in a case where the space number of the free processing spaces is less than the target number, controlling the current node to acquire the space number of free processing spaces and taking the free processing spaces as a part of the target processing spaces of the current node and applying to the GPU for a remaining part of the target processing spaces according to a difference between the target number and the space number and the target type.

Correspondingly, as shown in FIG. 5, the method for processing the image provided in this embodiment may include the steps described below.

In S401, an image to be processed and target prop flow information of a target effect are acquired, where the target prop flow information is obtained by editing flow information of a prop to be edited in an effect editing page, and in an editing process, the effect editing page displays a second image obtained by processing a first image according to the flow information of the prop to be edited.

In S402, a current node is controlled to receive input image information for each of the nodes in the target prop flow information.

The current node may be any node in the target prop flow information, such as an input node, a filter node, or an output node. The input image information may be the image information received by the current node, that is, the image information inputted to the current node.

In this embodiment, according to the arrangement order of the multiple nodes in the target prop flow information, each node may be sequentially used as the current node. Therefore, in the case where the current node is the input node, the current node may acquire information of the image to be processed as the input image information of the current node; and in the case where the current node is the filter node or the output node, the current node may receive the output image information of the output connection point connected to the input connection point of the current node through the input connection point of the current node as the input image information of the current node.

In S403, the current node is controlled to determine a target type of the target processing space and a target number of target processing spaces, where the target processing space is an occupied memory space when the current node processes the input image information.

The target processing space is a GPU memory space for the current node to process the input image information, that is, the current node may process the received input image information in the target processing space of the current node to obtain the output image information. Correspondingly, the target type may be a type of the target processing space and may be defined by a space size of the target processing space and a data processing format of the target processing space. The data processing format may be a format of data that the target processing space can process, for example, a format used by the target processing space for processing and only processing which type of value that is among the following four types: a red color channel value R, a green color channel value G, a blue color channel value B and a transparency parameter A. The target number may be a number of the target processing spaces required by the current node when processing the input image information.

Exemplarily, when the current node needs to process the received input image information, the current node may first determine the target type and the target number of the target processing spaces required by the current node to process the received input image information, for example, acquire the target type and the target number of the target processing spaces recorded in codes or the configuration information of the current node, or acquire the type and the number of the processing spaces required and determined when the current node in a trial operation as the target type and the target number of the target processing spaces required by the current node.

In S404, the current node is controlled to determine a free processing space that is among existing processing spaces and whose space type matches the target type, and S405 or S406 is performed, where the existing processing spaces are processing spaces that are applied for by the nodes in the target prop flow information.

The existing processing spaces may be the processing spaces that are applied for by the target effect before the current node determines the target processing space, that is, the processing spaces that are applied for by the nodes before the current node in the target prop flow information. The free processing space is a processing space that is not occupied at the current moment.

Exemplarily, after determining the target type and the target number of the target processing spaces, the current node may select the free processing space that is among existing memory spaces that are applied for by the target effect and whose type matches the target type of the target processing space.

In S405, in a case where a space number of free processing spaces is greater than or equal to the target number, the current node is controlled to acquire the target number of the free processing spaces and take the free processing spaces as the target processing spaces, and S407 is performed.

In S406, in a case where the space number of the free processing spaces is less than the target number, the current node is controlled to acquire the space number of free processing spaces, take the free processing spaces as a part of the target processing spaces and apply to the GPU for a remaining part of the target processing spaces according to a difference between the target number and the space number and the target type.

Exemplarily, after acquiring the free processing space whose space type matches the target type, the current node may determine whether the number of acquired free processing spaces is greater than or equal to the target number of the target processing spaces. In the case where the number of acquired free processing spaces is greater than or equal to the target number of the target processing spaces, the free processing spaces of the target number are directly acquired from the acquired processing spaces as the target processing spaces of the current node. In the case where the number of acquired free processing spaces is less than the target number of the target processing spaces, the acquired free processing spaces are all used as the target processing spaces of the current node, the difference between the target number of the target processing spaces required by the current node and the space number of the acquired free processing spaces is calculated as a number of the target processing spaces that need to be applied for, and the number of memory spaces whose space types match the target type are applied for to the GPU as the target processing spaces of the current node.

In this embodiment, when the nodes need to process the received input image information, the nodes do not directly apply to the GPU for the target number of processing spaces as the target processing spaces of the nodes, but preferentially use the free processing spaces that are applied for by the nodes in the target effect and whose space types match the target type as the target processing spaces. Moreover, only in the case where the number of the free processing spaces that match the target type is less than the target number, memory spaces whose number is the difference between the number of the free processing spaces and the target number are applied for to the GPU as the target processing spaces so that the existing processing spaces can be reused, thereby reducing the occupied memory space of the GPU and reducing the GPU cost and the storage cost.

In S407, the current node is controlled to process the input image information by using a target processing space to obtain at least one piece of output image information.

In this embodiment, after acquiring the target processing space, the current node can process the received input image information in the target processing space to obtain at least one piece of output image information.

In S408, the current node is controlled to output the at least one piece of output image information.

In this embodiment, after the current node performs processing and obtains the output image information, the current node may output the output image information. For example, in the case where the current node is the input node or the filter node, through an output connection point of the current node, the current node may output the corresponding output image information to a node connected to the output connection node; and in the case where the current node is the output node, the current node may use the output image information as the target image information of the target image and output the target image information.

In S409, when the processing is completed, a rendering instruction packet is sent to a graphics processing unit (GPU) to instruct the GPU to render the output image of each node according to an arrangement order of the multiple nodes in the target prop flow information and obtain a processed target image, where the rendering instruction packet includes rendering instructions of the multiple nodes.

In the method used in this embodiment, the existing processing spaces are reused, thereby reducing the occupied GPU memory space required in the image processing process, reducing the GPU cost and the storage cost, and reducing requirements for the configuration of the GPU.

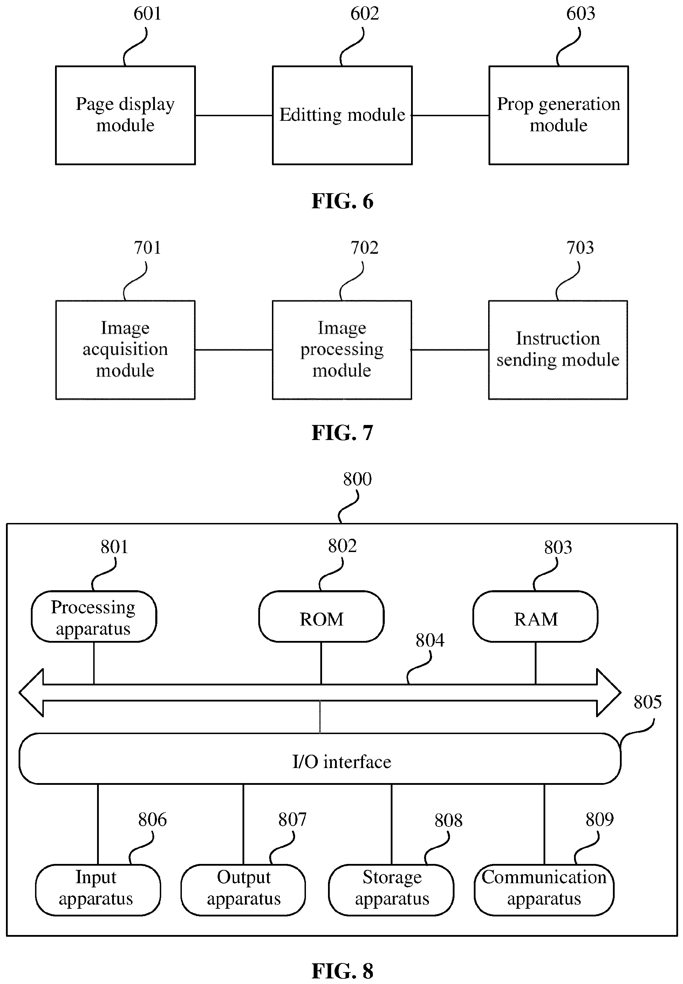

FIG. 6 is a block diagram of an apparatus for generating an effect according to an embodiment of the present disclosure. The apparatus may be implemented by software and/or hardware and may be configured in an electronic device. Typically, the apparatus may be configured in a computer device. The apparatus may generate an effect by performing a method for generating an effect. As shown in FIG. 6, the apparatus for generating an effect provided in this embodiment may include a page display module 601, an editing module 602, and a prop generation module 603.

The page display module 601 is configured to display an effect editing page and acquire a first image, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited.

The editing module 602 is configured to, in response to an editing operation, edit the flow information of the prop to be edited and update the second image displayed in the effect display region.

The prop generation module 603 is configured to, in response to an effect generation operation, generate a target effect according to edited target prop flow information.

This embodiment provides the apparatus for generating an effect. The page display module displays an effect editing page and acquires a first image, where the effect editing page is provided with a flow information display region and an effect display region, where the flow information display region is used for displaying flow information of a prop to be edited, and the effect display region is used for displaying a second image obtained by processing the first image according to the flow information of the prop to be edited. In response to an editing operation, the editing module edits the flow information of the prop to be edited and updates the second image displayed in the effect display region. In response to an effect generation operation, the prop generation module generates a target effect according to edited target prop flow information. In this embodiment, the preceding technical solutions are adopted. In this manner, the prop flow information is edited so as to edit the effect, and a preview effect of the edited prop flow information is displayed in real time in the editing process so that the difficulty of creating and editing the effect can be simplified, the time spent by a user on creating and editing the effect is shortened, and the user experience is improved.

In the preceding solutions, the flow information of the prop to be edited is presented in a form of a flowchart, where at least two nodes are provided in the flowchart, and each of the at least two nodes has at least one input connection point and/or at least one output connection point.

In the preceding solutions, the editing module 602 may include a list display unit and a node addition unit. The list display unit is configured to display a node list in response to a node addition operation acting on a first node in the flow information of the prop to be edited. The node addition unit is configured to, in response to a triggering operation on a second node in the node list, add the second node between the first node and a third node, where the third node is an adjacent node of the first node.

In the preceding solutions, the node addition operation may include a mouse right-click operation acting on the first node.

In the preceding solutions, the node addition operation may include a triggering operation acting on a list control of the first node, and the editing module 602 may further include a list control display unit. The list control display unit is configured to, before the node list is displayed in response to the node addition operation acting on the first node in the flow information of the prop to be edited, display the list control of the first node when a cursor moves to a display region of the output connection point of the first node.

In the preceding solutions, the node addition unit is configured to add the second node in the flow information display region, delete a first connection line segment displayed in the flow information display region, and draw a second connection line segment and a third connection line segment, where the first connection line segment is used for connecting the output connection point of the first node to the input connection point of the third node, the second connection line segment is used for connecting the output connection point of the first node to the input connection node of the second node, and the third connection line segment is used for connecting the output connection point of the second node to the input connection point of the third node.

Optionally, the apparatus for generating an effect provided in this embodiment may further include an image display module. The image display module is configured to display an input image of the corresponding input connection point when the cursor moves to a display region of any input connection point and/or display an output image of the corresponding output connection point when the cursor moves to a display region of any output connection point.

In the preceding solutions, the editing module 602 may include an endpoint movement unit and/or a connection line segment drawing unit. The endpoint movement unit is configured to, in response to a first sliding operation, control an endpoint of a connection line segment at a target input connection point to move with the first sliding operation until the first sliding operation ends, where the first sliding operation starts from the target input connection point. The connection line segment drawing unit is configured to, in response to a second sliding operation, draw a new connection line segment with a target output connection point as an initial point and control a terminal point of the new connection line segment to move with the second sliding operation until the second sliding operation ends, where the second sliding operation starts from the target output connection point.

In the preceding solutions, the editing module 602 may include a configuration information display unit and a configuration information modification unit. The configuration information display unit is configured to display configuration information of a fourth node in response to a configuration information display operation for the fourth node in the flow information of the prop to be edited. The configuration information modification unit is configured to display modified configuration information in response to a configuration information modification operation.

In the preceding solutions, the configuration information display operation may include a mouse left-click operation for the fourth node.

In the preceding solutions, the configuration information display operation may include a triggering operation acting on a configuration control of the fourth node, and the editing module 602 may further include a configuration control display unit. The configuration control display unit is configured to, before the configuration information of the fourth node is displayed in response to the configuration information display operation for the fourth node in the flow information of the prop to be edited, display the configuration control of the fourth node in response to a mouse left-click operation for the fourth node.

Optionally, the apparatus for generating the effect provided in this embodiment may further include a prop release module. The prop release module is configured to, after the target effect is generated according to the edited target prop flow information, upload the target effect to a server for release in response to a release operation for the target effect.

The apparatus for generating the effect provided in the embodiment of the present disclosure can execute the method for generating a prop provided in any embodiment of the present disclosure and has corresponding functional modules of the executed method for generating a prop. For technical details not described in detail in the embodiment, reference may be made to the method for generating a prop provided in any embodiment of the present disclosure.

FIG. 7 is a block diagram of an apparatus for processing an image according to an embodiment of the present disclosure. The node may be implemented by software and/or hardware and may be configured in an electronic device. Typically, the node may be configured in a mobile phone or a tablet computer. The node may process an image by performing a method for processing an image. As shown in FIG. 7, the node provided in this embodiment may include an image acquisition module 701, an image processing module 702, and an instruction sending module 703.

The image acquisition module 701 is configured to acquire an image to be processed and target prop flow information of a target effect, where the target prop flow information is obtained by editing flow information of a prop to be edited in an effect editing page, and in an editing process, the effect editing page displays a second image obtained by processing a first image according to the flow information of the prop to be edited.

The image processing module 702 is configured to process the image to be processed by using the target effect.

The instruction sending module 703 is configured to, when the processing is completed, send a rendering instruction packet to a graphics processing unit (GPU) to instruct the GPU to render the output image of each node according to an arrangement order of multiple nodes in the target prop flow information and obtain a processed target image, where the rendering instruction packet includes rendering instructions of the multiple nodes.

In the node provided in this embodiment, the image acquisition module acquires an image to be processed and target prop flow information of a target effect, where the target prop flow information is obtained by editing flow information of a prop to be edited in an effect editing page, and in an editing process, the effect editing page displays a second image obtained by processing a first image according to the flow information of the prop to be edited; the image processing module processes the image to be processed by using the target effect; and when the processing is completed, the instruction sending module sends a rendering instruction packet to a GPU to instruct the GPU to render the output image of each node according to an arrangement order of the multiple nodes in the target prop flow information and obtain a processed target image, where the rendering instruction packet includes rendering instructions of the multiple nodes. In this embodiment, the preceding technical solutions are adopted. In this manner, the rendering instructions are sent to the GPU at the same time after all the multiple nodes finish processing the received image information, thereby simplifying the image processing process and reducing the running resources occupied by the image processing process.

In the preceding solutions, the image processing module 702 may include an information receiving unit, an information processing unit, and an information output unit. The information receiving unit is configured to control a current node to receive input image information for each of the nodes in the target prop flow information. The information processing unit is configured to control the current node to process the input image information by using a target processing space, so as to obtain at least one piece of output image information, where the target processing space is an occupied memory space when the current node processes the input image information. The information output unit is configured to control the current node to output the at least one piece of output image information.

In the preceding solutions, the image processing module 702 may further include a number determination unit, a space determination unit, a space acquisition unit, and a space application unit. The number determination unit is configured to, before the current node is controlled to process the input image information by using the target processing space, control the current node to determine a target type of the target processing space and a target number of target processing spaces. The space determination unit is configured to control the current node to determine a free processing space that is among existing processing spaces and whose space type matches the target type, where the existing processing spaces are processing spaces that are applied for by the nodes in the target prop flow information. The space acquisition unit is configured to, in a case where a space number of free processing spaces is greater than or equal to the target number, control the current node to acquire the target number of free processing spaces and take the free processing spaces as the target processing spaces. The space application unit is configured to, in a case where the space number of the free processing spaces is less than the target number, control the current node to acquire the space number of free processing spaces, take the free processing spaces as a part of the target processing spaces and apply to the GPU for a remaining part of the target processing spaces according to a difference between the target number and the space number and the target type.

The node provided in the embodiment of the present disclosure can execute the method for processing the image provided in any embodiment of the present disclosure and has corresponding functional modules of the executed the method for processing the image. For technical details not described in detail in this embodiment, reference may be made to the method for processing the image provided in any embodiment of the present disclosure.

Referring to FIG. 8, FIG. 8 is a structural diagram of an electronic device (such as a computer device or a terminal device) 800 applicable to implementing the embodiments of the present disclosure. A terminal device in the embodiments of the present disclosure may include, but is not limited to, a mobile terminal such as a mobile phone, a laptop, a digital broadcast receiver, a personal digital assistant (PDA), a PAD, a portable media player (PMP), and a vehicle-mounted terminal (such as a vehicle-mounted navigation terminal) and a fixed terminal such as a digital television (TV) and a desktop computer. The electronic device shown in FIG. 8 is merely an example and is not intended to limit the function and usage scope of the embodiments of the present disclosure.

As shown in FIG. 8, the electronic device 800 may include the processing apparatus 801 (such as a central processing unit and a graphics processing unit). The processing apparatus 801 may perform various types of appropriate operations and processing according to a program stored in a read-only memory (ROM) 802 or a program loaded from a storage apparatus 808 to a random-access memory (RAM) 803. Various programs and data required for the operation of the electronic device 800 are also stored in the RAM 803. The processing apparatus 801, the ROM 802 and the RAM 803 are connected to each other through a bus 804. An input/output (I/O) interface 805 is also connected to the bus 804.

Generally, the following apparatuses may be connected to the I/O interface 805: an input apparatus 806 such as a touch screen, a touch pad, a keyboard, a mouse, a camera, a microphone, an accelerometer and a gyroscope; an output apparatus 807 such as a liquid-crystal display (LCD), a speaker and a vibrator; the storage apparatus 808 such as a magnetic tape and a hard disk; and a communication apparatus 809. The communication apparatus 809 may allow the electronic device 800 to perform wireless or wired communication with other devices to exchange data. Although FIG. 8 shows the electronic device 800 having various apparatuses, it is to be understood that not all of the apparatuses shown herein need to be implemented or present. Alternatively, more or fewer apparatuses may be implemented or present.

Particularly, according to the embodiments of the present disclosure, the process described above with reference to a flowchart may be implemented as a computer software program. For example, a computer program product is included in the embodiments of the present disclosure. The computer program product includes a computer program carried in a non-transitory computer-readable medium. The computer program includes program codes for executing the method shown in the flowchart. In such an embodiment, the computer program may be downloaded from a network and installed through the communication apparatus 809, or may be installed from the storage apparatus 808, or may be installed from the ROM 802. When the computer program is executed by the processing apparatus 801, the preceding functions defined in the method of the embodiments of the present disclosure are performed.

It is to be noted that the preceding computer-readable medium in the present disclosure may be a computer-readable signal medium or a computer-readable storage medium or any combination thereof. The computer-readable storage medium may be, but is not limited to, for example, an electronic, magnetic, optical, electromagnetic, infrared or semiconductor system, apparatus or device, or any combination thereof. More specific examples of the computer-readable storage medium may include, but are not limited to, an electrical connection with at least one wire, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any appropriate combination thereof. In the present disclosure, the computer-readable storage medium may be any tangible medium including or storing a program. The program may be used by an instruction execution system, apparatus, or device or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms, including, but not limited to, an electromagnetic signal, an optical signal, or any suitable combination thereof. The computer-readable signal medium may also be any computer-readable medium except the computer-readable storage medium. The computer-readable signal medium may send, propagate, or transmit a program used by an instruction execution system, apparatus, or device or used in conjunction with an instruction execution system, apparatus, or device. The program codes included in the computer-readable medium may be transmitted via any appropriate medium which includes, but is not limited to, a wire, an optical cable, a radio frequency (RF), or any appropriate combination thereof.

In some embodiments, clients and servers may communicate using any currently known or future developed network protocol, such as HTTP (HyperText Transfer Protocol), and may be interconnected with any form or medium of digital data communication (such as a communication network). Examples of the communication network include a local area network (LAN), a wide area networks (WAN), an internet (such as the Internet), and a peer-to-peer network (such as an Ad-Hoc network), as well as any currently known or future developed network.

The preceding computer-readable medium may be included in the preceding electronic device or may exist alone without being assembled into the electronic device.

The computer-readable medium carries at least one program which, when executed by the electronic device, causes the electronic device to perform the steps described below.

An effect editing page is displayed and a first image is acquired, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited; in response to an editing operation, the flow information of the prop to be edited is edited and the second image displayed in the effect display region is updated; and in response to an effect generation operation, a target effect is generated according to edited target prop flow information.

Alternatively, an image to be processed and target prop flow information of a target effect are acquired, where the target prop flow information is obtained by editing flow information of a prop to be edited in an effect editing page, and in an editing process, the effect editing page displays a second image obtained by processing a first image according to the flow information of the prop to be edited; the image to be processed is processed by using the target effect; and when the processing is completed, a rendering instruction packet is sent to a GPU to instruct the GPU to render the output image of each node according to an arrangement order of multiple nodes in the target prop flow information and obtain a processed target image, where the rendering instruction packet includes rendering instructions of the multiple nodes.

Computer program codes for performing the operations in the present disclosure may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any kind of network including a local area network (LAN) or a wide area network (WAN), or may be connected to an external computer (for example, via the Internet through an Internet service provider).

Flowcharts and block diagrams among the drawings illustrate architectures, functions, and operations possible to implement in accordance with the system, method, and computer program product in various embodiments of the present disclosure. In this regard, each block in the flowcharts or block diagrams may represent a module, a program segment, or part of codes that contains at least one executable instruction for implementing specified logical functions. It is to be noted that in some alternative implementations, functions marked in blocks may occur in an order different from that marked in the drawings. For example, two successive blocks may, in fact, be executed substantially in parallel or in reverse order, which depends on the functions involved. It is also to be noted that each block in the block diagrams and/or flowcharts and a combination of blocks in the block diagrams and/or flowcharts may be implemented by a specific-purpose hardware-based system which performs specified functions or operations or a combination of specific-purpose hardware and computer instructions.

The involved units described in the embodiments of the present disclosure may be implemented by software or hardware. The name of a unit is not intended to limit the unit itself in some circumstance.

The functions described above herein may be executed, at least partially, by at least one hardware logic component. For example, without limitation, example types of the hardware logic components that can be used include a field-programmable gate array (FPGA), an application-specific integrated circuit (ASIC), an application-specific standard product (ASSP), a system-on-chip (SoC), a complex programmable logic device (CPLD), and the like.

In the context of the present disclosure, a machine-readable medium may be a tangible medium that may include or store a program used by an instruction execution system, apparatus, or device or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device or any suitable combination thereof. Concrete examples of the machine-readable storage medium include an electrical connection according to at least one wire, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

According to at least one embodiment of the present disclosure, example 1 provides a method for generating an effect. The method includes the steps below.

An effect editing page is displayed and a first image is acquired, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited.

In response to an editing operation, the flow information of the prop to be edited is edited and the second image displayed in the effect display region is updated.

In response to an effect generation operation, a target effect is generated according to edited target prop flow information.

According to at least one embodiment of the present disclosure, in example 2, according to the method in example 1, the flow information of the prop to be edited is presented in a form of a flowchart, where at least two nodes are provided in the flowchart, and each of the at least two nodes has at least one input connection point and/or at least one output connection point.

According to at least one embodiment of the present disclosure, in example 3, according to the method in example 2, the step of in response to the editing operation, editing the flow information of the prop to be edited includes the steps described below.

A node list is displayed in response to a node addition operation acting on a first node in the flow information of the prop to be edited.

**In** response to a triggering operation on a second node in the node list, the second node is added between the first node and a third node, where the third node is an adjacent node of the first node.

According to at least one embodiment of the present disclosure, in example 4, according to the method in example 3, the node addition operation includes a mouse right-click operation acting on the first node.

According to at least one embodiment of the present disclosure, in example 5, according to the method in example 3, the node addition operation includes a triggering operation acting on a list control of the first node, and before the node list is displayed in response to the node addition operation acting on the first node in the flow information of the prop to be edited, the method further includes the step described below.

The list control of the first node is displayed when a cursor moves to a display region of the at least one output connection point of the first node.

According to at least one embodiment of the present disclosure, in example 6, according to the method in example 3, the step of adding the second node between the first node and the third node includes the step described below.

The second node is added in the flow information display region, a first connection line segment displayed in the flow information display region is deleted, and a second connection line segment and a third connection line segment are drawn, where the first connection line segment is used for connecting the at least one output connection point of the first node to the at least one input connection point of the third node, the second connection line segment is used for connecting the at least one output connection point of the first node to the at least one input connection node of the second node, and the third connection line segment is used for connecting the at least one output connection point of the second node to the at least one input connection point of the third node.

According to at least one embodiment of the present disclosure, in example 7, according to the method in any one of examples 2 to 6, the method further includes the steps described below.

An input image of the corresponding at least one input connection point is displayed when the cursor moves to a display region of any of the at least one input connection point.

An output image of the corresponding at least one output connection point is displayed when the cursor moves to a display region of any of the at least one output connection point.

According to at least one embodiment of the present disclosure, in example 8, according to the method in any one of examples 2 to 6, the step of in response to the editing operation, editing the flow information of the prop to be edited includes the steps described below.

In response to a first sliding operation, an endpoint of a connection line segment at a target input connection point is controlled to move with the first sliding operation until the first sliding operation ends, where the first sliding operation starts from the target input connection point.

In response to a second sliding operation, a new connection line segment with a target output connection point as an initial point is drawn and a terminal point of the new connection line segment is controlled to move with the second sliding operation until the second sliding operation ends, where the second sliding operation starts from the target output connection point.

According to at least one embodiment of the present disclosure, in example 9, according to the method in any one of examples 2 to 6, the step of in response to the editing operation, editing the flow information of the prop to be edited includes the steps described below.

Configuration information of a fourth node is displayed in response to a configuration information display operation for the fourth node in the flow information of the prop to be edited.

Modified configuration information is displayed in response to a configuration information modification operation.

According to at least one embodiment of the present disclosure, in example 10, according to the method in example 9, the configuration information display operation includes a mouse left-click operation for the fourth node.

According to at least one embodiment of the present disclosure, in example 11, according to the method in example 9, the configuration information display operation includes a triggering operation acting on a configuration control of the fourth node, and before the configuration information of the fourth node is displayed in response to the configuration information display operation for the fourth node in the flow information of the prop to be edited, the method further includes the step described below.

The configuration control of the fourth node is displayed in response to a mouse left-click operation for the fourth node.

According to at least one embodiment of the present disclosure, in example 12, according to the method in any one of examples 1 to 6, after the target effect is generated according to the edited target prop flow information, the method further includes the step described below.

The target effect is uploaded to a server for release in response to a release operation for the target effect.

According to at least one embodiment of the present disclosure, example 13 provides a method for processing an image. The method includes the steps described below.

An image to be processed and target prop flow information of a target effect are acquired, where the target prop flow information is obtained by editing flow information of a prop to be edited in an effect editing page, and in an editing process, the effect editing page displays a second image obtained by processing a first image according to the flow information of the prop to be edited.

The image to be processed is processed by using the target effect.

When the processing is completed, a rendering instruction packet is sent to a graphics processing unit (GPU) to instruct the GPU to render the output image of each node according to an arrangement order of multiple nodes in the target prop flow information and obtain a processed target image, where the rendering instruction packet includes rendering instructions of the multiple nodes.

According to at least one embodiment of the present disclosure, in example 14, according to the method in example 13, the step of processing the image to be processed by using the target effect includes the steps described below.

A current node is controlled to receive input image information for each of the nodes in the target prop flow information.

The current node is controlled to process the input image information by using a target processing space, so as to obtain at least one piece of output image information, where the target processing space is an occupied memory space when the current node processes the input image information.

The current node is controlled to output the at least one piece of output image information.

According to at least one embodiment of the present disclosure, in example 15, according to the method in example 14, before the current node is controlled to process the input image information by using the target processing space, the method includes the steps described below.

The current node is controlled to determine a target type of the target processing space and a target number of target processing spaces.

The current node is controlled to determine a free processing space that is among existing processing spaces and whose space type matches the target type, where the existing processing spaces are processing spaces that are applied for by the nodes in the target prop flow information.

In a case where a space number of free processing spaces is greater than or equal to the target number, the current node is controlled to acquire the target number of free processing spaces and take the free processing spaces as the target processing spaces.

In a case where the space number of the free processing spaces is less than the target number, the current node is controlled to acquire the space number of free processing spaces, take the free processing spaces as a part of the target processing spaces and apply to the GPU for a remaining part of the target processing spaces according to a difference between the target number and the space number and the target type.

According to at least one embodiment of the present disclosure, example 16 provides an apparatus for generating a prop. The apparatus includes a page display module, an editing module, and a prop generation module.

The page display module is configured to display an effect editing page and acquire a first image, where the effect editing page is provided with a flow information display region and an effect display region, where the flow information display region is used for displaying flow information of a prop to be edited, and the effect display region is used for displaying a second image, where the second image is a preview image obtained by processing the first image according to the flow information of the prop to be edited.

The editing module is configured to, in response to an editing operation, edit the flow information of the prop to be edited and update the second image displayed in the effect display region.

The prop generation module is configured to, in response to an effect generation operation, generate a target effect according to edited target prop flow information.

According to at least one embodiment of the present disclosure, example 17 provides an apparatus for processing an image. The node includes an image acquisition module, an image processing module, and an instruction sending module.

The image acquisition module is configured to acquire an image to be processed and target prop flow information of a target effect, where the target prop flow information is obtained by editing flow information of a prop to be edited in an effect editing page, and in an editing process, the effect editing page displays a second image obtained by processing a first image according to the flow information of the prop to be edited.

The image processing module is configured to process the image to be processed by using the target effect.

The instruction sending module is configured to, when the processing is completed, send a rendering instruction packet to a graphics processing unit (GPU) to instruct the GPU to render the output image of each node according to an arrangement order of multiple nodes in the target prop flow information and obtain a processed target image, where the rendering instruction packet includes rendering instructions of the multiple nodes.

According to at least one embodiment of the present disclosure, example 18 provides an electronic device. The electronic device includes at least one processor and a memory configured to store at least one program.

The at least one program is executed by the at least one processor to cause the at least one processor to perform the method for generating the effect in any of examples 1 to 12 or the method for processing the image in any of examples 13 to 15.

According to at least one embodiment of the present disclosure, example 19 provides a computer-readable storage medium on which a computer program is stored, where the program is executed by a processor to cause the processor to perform the method for generating the effect in any of examples 1 to 12 or the method for processing the image in any of examples 13 to 15.

According to at least one embodiment of the present disclosure, example 20 provides a computer program product, where the computer program product, when executed by a computer, causes the computer to perform the method for generating the effect in any of examples 1 to 12 or the method for processing the image in any of examples 13 to 15.

Additionally, although operations are depicted in a particular order, this should not be construed as that these operations are required to be performed in the particular order shown or in a sequential order. In certain circumstances, multitasking and parallel processing may be advantageous. Similarly, although several specific implementation details are included in the preceding discussion, these should not be construed as limiting the scope of the present disclosure. Some features described in the context of separate embodiments may also be implemented in combination in a single embodiment. Conversely, various features described in the context of a single embodiment may also be implemented in multiple embodiments individually or in any suitable sub-combination.

## Claims

1. A method for generating an effect, comprising:
displaying (S101, S201) an effect editing page and acquiring a first image, wherein the effect editing page is provided with a flow information display region and an effect display region, wherein the flow information display region is used for displaying flow information of a prop to be edited, and the effect display region is used for displaying a second image, wherein the second image is a preview image obtained by processing the first image according to the flow information of the prop to be edited;
in response to an editing operation, editing (S102) the flow information of the prop to be edited and updating (S102, S208) the second image displayed in the effect display region; and
in response to an effect generation operation, generating (S103, S209) a target effect according to edited target prop flow information;
wherein the flow information of the prop to be edited is presented in a form of a flowchart, wherein at least two nodes are provided in the flowchart, and each of the at least two nodes has at least one of: an input connection point or an output connection point;
wherein in response to the editing operation, editing the flow information of the prop to be edited comprises: displaying (S202) a node list in response to a node addition operation acting on a first node in the flow information of the prop to be edited, and in response to a triggering operation on a second node in the node list, adding (S203) the second node between the first node and a third node, wherein the third node is an adjacent node of the first node;
wherein displaying (S202) the node list in response to the node addition operation acting on the first node in the flow information of the prop to be edited, and in response to the triggering operation on the second node in the node list, adding (S203) the second node between the first node and the third node, comprises:
in a case where a list control of the first node is displayed in response to detecting that a cursor moves to a display region of an output connection point of the first node and the node list is displayed in response to a triggering operation acting on the list control of the first node, adding the second node between the first node and a node whose input connection point is connected to the output connection point of the first node in response to the triggering operation on the second node in the node list; and
in a case where the list control of the first node is displayed in response to detecting that the cursor moves to a display region of an input connection point of the first node and the node list is displayed in response to the triggering operation acting on the list control of the first node, adding the second node between the first node and a node whose output connection point is connected to the input connection point of the first node in response to the triggering operation on the second node in the node list.

2. The method of claim 1, further comprising at least one of:
displaying an input image of any input connection point in response to detecting that the cursor moves to a display region of the any input connection point; or
displaying an output image of any output connection point in response to detecting that the cursor moves to a display region of the any output connection point.

3. The method of claim 1, wherein in response to the editing operation, editing the flow information of the prop to be edited further comprises at least one of:
in response to a first sliding operation, controlling (S204) an endpoint of a connection line segment at a target input connection point to move with the first sliding operation until the first sliding operation ends, wherein the first sliding operation starts from the target input connection point; or
in response to a second sliding operation, drawing (S204) a new connection line segment with a target output connection point as an initial point and controlling a terminal point of the new connection line segment to move with the second sliding operation until the second sliding operation ends, wherein the second sliding operation starts from the target output connection point; or
displaying (S206) configuration information of a fourth node in response to a configuration information display operation for the fourth node in the flow information of the prop to be edited; and displaying (S207) modified configuration information in response to a configuration information modification operation.

4. The method of claim 3, wherein,
the configuration information display operation comprises a mouse left-click operation for the fourth node; or
the configuration information display operation comprises a triggering operation acting on a configuration control of the fourth node, and before the configuration information of the fourth node is displayed in response to the configuration information display operation for the fourth node in the flow information of the prop to be edited, the method further comprises: displaying the configuration control of the fourth node in response to a mouse left-click operation for the fourth node.

5. The method of claim 1, wherein after the target effect is generated according to the edited target prop flow information, the method further comprises:
uploading (S210) the target effect to a server for release in response to a release operation for the target effect.

6. A method for processing an image, comprising:
acquiring (S301, S401) an image to be processed and target prop flow information of a target effect, wherein the target prop flow information is obtained by editing flow information of a prop to be edited in an effect editing page in the following manner: adding a second node between a first node and a third node in response to a triggering operation on the second node in a node list, wherein the third node is an adjacent node of the first node, wherein the flow information of the prop to be edited is presented in a form of a flowchart, at least two nodes are provided in the flowchart, and each of the at least two nodes has an input connection point and/or an output connection point, wherein in an editing process, the effect editing page displays a second image obtained by processing a first image according to the flow information of the prop to be edited, and wherein adding the second node between the first node and the third node in response to the triggering operation on the second node in the node list comprises: in a case where a list control of the first node is displayed in response to detecting that a cursor moves to a display region of an output connection point of the first node and the node list is displayed in response to a triggering operation acting on the list control of the first node, adding the second node between the first node and a node whose input connection point is connected to the output connection point of the first node in response to the triggering operation on the second node in the node list, and in a case where the list control of the first node is displayed in response to detecting that the cursor moves to a display region of an input connection point of the first node and the node list is displayed in response to the triggering operation acting on the list control of the first node, adding the second node between the first node and a node whose output connection point is connected to the input connection point of the first node in response to the triggering operation on the second node in the node list;
processing (S302) the image to be processed by using the target effect; and
in response to the processing being completed and according to an arrangement order of a plurality of nodes in the target prop flow information, sending (S303, S409) a rendering instruction packet to a graphics processing unit (GPU) to instruct the GPU to render an output image of each node and obtain a processed target image, wherein the rendering instruction packet comprises rendering instructions of the plurality of nodes.

7. The method of claim 6, wherein processing the image to be processed by using the target effect comprises:
controlling (S402) a current node to receive input image information for each node in the target prop flow information;
controlling (S407) the current node to process the input image information by using at least one target processing space, so as to obtain at least one piece of output image information, wherein each of the at least one target processing space is an occupied memory space when the current node processes the input image information; and
controlling (S408) the current node to output the at least one piece of output image information.

8. The method of claim 7, wherein before the current node is controlled to process the input image information by using the target processing space, the method comprises:
controlling (S403) the current node to determine a target type of each of the at least one target processing space and a target number of the at least one target processing space;
controlling (S404) the current node to determine at least one free processing space that is among existing processing spaces and whose space type matches the target type, wherein the existing processing spaces are processing spaces that are applied for by the plurality of nodes in the target prop flow information; wherein
in response to a space number of the at least one free processing space being greater than or equal to the target number, controlling (S405) the current node to acquire a target number of free processing spaces and take the free processing spaces as the at least one target processing space of the current node; and
in case where the space number of the at least one free processing space is less than the target number, controlling (S406) the current node to acquire the space number of the at least one free processing space, take the at least one free processing space as a part of the at least one target processing space of the current node, and apply to the GPU for a remaining part of the at least one target processing space according to the target type and a difference between the target number and the space number.

9. An electronic device, comprising:
at least one processor; and
a memory configured to store at least one program;
wherein the at least one program is executed by the at least one processor to cause the at least one processor to perform the method for generating an effect of any one of claims 1 to 5 or the method for processing an image of any one of claims 6 to 8.

10. A computer-readable storage medium on which a computer program is stored, wherein the computer program is executed by a processor to cause the processor to perform the method for generating an effect of any one of claims 1 to 5 or the method for processing an image of any one of claims 6 to 8.

11. A computer program product, wherein the computer program product, when executed by a computer, causes the computer to perform the method for generating an effect of any one of claims 1 to 5 or the method for processing an image of any one of claims 6 to 8.

## Patentansprüche

1. Verfahren zum Erzeugen eines Effekts, umfassend:
Anzeigen (S101, S201) einer Effektbearbeitungsseite und Erlangen eines ersten Bildes, wobei die Effektbearbeitungsseite mit einem Bereich zur Anzeige von Ablaufinformationen und einem Effektanzeigebereich ausgestattet ist, wobei der Bereich zur Anzeige von Ablaufinformationen zum Anzeigen von Ablaufinformationen eines zu bearbeitenden Requisits verwendet wird und der Effektanzeigebereich zum Anzeigen eines zweiten Bildes verwendet wird, wobei das zweite Bild ein Vorschaubild ist, das durch Verarbeiten des ersten Bildes gemäß den Ablaufinformationen des zu bearbeitenden Requisits erhalten wird;
als Antwort auf eine Bearbeitungsoperation erfolgendes Bearbeiten (S102) der Ablaufinformationen des zu bearbeitenden Requisits und Aktualisieren (S102, S208) des im Effektanzeigebereich angezeigten zweiten Bildes; und
als Antwort auf eine Effekterzeugungsoperation erfolgendes Erzeugen (S103, S209) eines Zieleffekts gemäß den bearbeiteten Ablaufinformationen des Zielrequisits;
wobei die Ablaufinformationen des zu bearbeitenden Requisits in Form eines Ablaufplans dargestellt werden, wobei in dem Ablaufplan mindestens zwei Knoten bereitgestellt sind und jeder der mindestens zwei Knoten mindestens eines von Folgendem aufweist: ein Eingangsverbindungspunkt oder ein Ausgangsverbindungspunkt;
wobei das Bearbeiten der Ablaufinformationen des zu bearbeitenden Requisits als Antwort auf die Bearbeitungsoperation umfasst: Anzeigen (S202) einer Knotenliste als Antwort auf eine Knotenhinzufügungsoperation, die auf einen ersten Knoten in den Ablaufinformationen des zu bearbeitenden Requisits wirkt, und als Antwort auf eine Auslöseoperation auf einem zweiten Knoten in der Knotenliste erfolgendes Hinzufügen (S203) des zweiten Knotens zwischen dem ersten Knoten und einem dritten Knoten, wobei der dritte Knoten ein benachbarter Knoten des ersten Knotens ist;
wobei das Anzeigen (S202) der Knotenliste als Antwort auf die Knotenhinzufügungsoperation, die auf den ersten Knoten in den Ablaufinformationen des zu bearbeitenden Requisits wirkt, und Hinzufügen (S203) des zweiten Knotens zwischen dem ersten Knoten und dem dritten Knoten als Antwort auf die Auslöseoperation auf dem zweiten Knoten in der Knotenliste umfasst:
in einem Fall, in dem als Antwort auf das Ermitteln, dass ein Cursor sich zu einem Anzeigebereich eines Ausgangsverbindungspunkts des ersten Knotens bewegt, ein Listensteuerelement des ersten Knotens angezeigt wird und als Antwort auf eine Auslöseoperation, die auf das Listensteuerelement des ersten Knotens wirkt, die Knotenliste angezeigt wird: Hinzufügen des zweiten Knotens zwischen dem ersten Knoten und einem Knoten, dessen Eingangsverbindungspunkt mit dem Ausgangsverbindungspunkt des ersten Knotens verbunden ist, als Antwort auf die Auslöseoperation auf dem zweiten Knoten in der Knotenliste; und
in einem Fall, in dem als Antwort auf das Ermitteln, dass der Cursor sich zu einem Anzeigebereich eines Eingangsverbindungspunkts des ersten Knotens bewegt, das Listensteuerelement des ersten Knotens angezeigt wird, und als Antwort auf die Auslöseoperation, die auf das Listensteuerelement des ersten Knotens wirkt, die Knotenliste angezeigt wird: Hinzufügen des zweiten Knotens zwischen dem ersten Knoten und einem Knoten, dessen Ausgangsverbindungspunkt mit dem Eingangsverbindungspunkt des ersten Knotens verbunden ist, als Antwort auf die Auslöseoperation auf dem zweiten Knoten in der Knotenliste.

2. Verfahren nach Anspruch 1, ferner mindestens eines von Folgendem umfassend:
Anzeigen eines Eingabebildes eines beliebigen Eingangsverbindungspunkts als Antwort auf das Ermitteln, dass der Cursor sich zu einem Anzeigebereich des beliebigen Eingangsverbindungspunkts bewegt; oder
Anzeigen eines Ausgabebildes eines beliebigen Ausgangsverbindungspunkts als Antwort auf das Ermitteln, dass der Cursor sich zu einem Anzeigebereich des beliebigen Ausgangsverbindungspunkts bewegt.

3. Verfahren nach Anspruch 1, wobei das Bearbeiten der Ablaufinformationen des zu bearbeitenden Requisits als Antwort auf die Bearbeitungsoperation ferner mindestens eines von Folgendem umfasst:
als Antwort auf eine erste Schiebeoperation erfolgendes Steuern (S204) eines Endpunkts eines Verbindungsliniensegments an einem Ziel-Eingangsverbindungspunkt, damit er sich mit der ersten Schiebeoperation bewegt, bis die erste Schiebeoperation endet, wobei die erste Schiebeoperation von dem Ziel-Eingangsverbindungspunkt ausgeht; oder
als Antwort auf eine zweite Schiebeoperation erfolgendes Zeichnen (S204) eines neuen Verbindungsliniensegments mit einem Ziel-Ausgangsverbindungspunkt als Startpunkt und Steuern eines Endpunkts des neuen Verbindungsliniensegments, damit er sich mit der zweiten Schiebeoperation bewegt, bis die zweite Schiebeoperation endet, wobei die zweite Schiebeoperation von dem Ziel-Ausgangsverbindungspunkt ausgeht; oder
Anzeigen (S206) von Konfigurationsinformationen eines vierten Knotens als Antwort auf eine Konfigurationsinformationen-Anzeigeoperation für den vierten Knoten in den Ablaufinformationen des zu bearbeitenden Requisits; und Anzeigen (S207) von modifizierten Konfigurationsinformationen als Antwort auf eine Konfigurationsinformation-Änderungsoperation.

4. Verfahren nach Anspruch 3, wobei:
die Konfigurationsinformation-Anzeigeoperation eine Maus-Linksklick-Operation für den vierten Knoten umfasst; oder
die Konfigurationsinformationen-Anzeigeoperation eine Auslöseoperation umfasst, die auf ein Konfigurationssteuerelement des vierten Knotens wirkt, und bevor als Antwort auf die Konfigurationsinformationen-Anzeigeoperation für den vierten Knoten in den Ablaufinformationen des zu bearbeitenden Requisits die Konfigurationsinformationen des vierten Knotens angezeigt werden, das Verfahren ferner umfasst: Anzeigen des Konfigurationssteuerelements des vierten Knotens als Antwort auf eine Maus-Linksklick-Operation für den vierten Knoten.

5. Verfahren nach Anspruch 1, wobei, nachdem der Zieleffekt gemäß den bearbeiteten Zielrequisit-Ablaufinformationen erzeugt wurde, das Verfahren ferner umfasst:
Hochladen (S210) des Zieleffekts auf einen Server zur Veröffentlichung als Antwort auf einen Veröffentlichungsoperation für den Zieleffekt.

6. Verfahren zum Verarbeiten eines Bildes, umfassend:
Erlangen (S301, S401) eines zu verarbeitenden Bildes und von Zielrequisit-Ablaufinformationen eines Zieleffekts, wobei die Zielrequisit-Ablaufinformationen durch Bearbeiten von Ablaufinformationen eines zu bearbeitenden Requisits auf einer Effektbearbeitungsseite folgendermaßen erlangt werden: Hinzufügen eines zweiten Knotens zwischen einem ersten Knoten und einem dritten Knoten als Antwort auf eine Auslöseoperation auf dem zweiten Knoten in einer Knotenliste, wobei der dritte Knoten ein benachbarter Knoten des ersten Knotens ist, wobei die Ablaufinformationen des zu bearbeitenden Requisits in Form eines Ablaufplans dargestellt werden, im Ablaufplan mindestens zwei Knoten bereitgestellt sind und jeder der mindestens zwei Knoten einen Eingangsverbindungspunkt und/oder einen Ausgangsverbindungspunkt aufweist, wobei in einem Bearbeitungsprozess die Effektbearbeitungsseite ein zweites Bild anzeigt, das durch Verarbeitung eines ersten Bildes gemäß den Ablaufinformationen des zu bearbeitenden Requisits erhalten wird, und wobei das Hinzufügen des zweiten Knotens zwischen dem ersten Knoten und dem dritten Knoten als Antwort auf die Auslöseoperation auf dem zweiten Knoten in der Knotenliste Folgendes umfasst: in einem Fall, in dem als Antwort auf das Ermitteln, dass ein Cursor sich zu einem Anzeigebereich eines Ausgangsverbindungspunkts des ersten Knotens bewegt, ein Listensteuerelement des ersten Knotens angezeigt wird und als Antwort auf eine Auslöseoperation, die auf das Listensteuerelement des ersten Knotens wirkt, die Knotenliste angezeigt wird: Hinzufügen des zweiten Knotens zwischen dem ersten Knoten und einem Knoten, dessen Eingangsverbindungspunkt mit dem Ausgangsverbindungspunkt des ersten Knotens verbunden ist, als Antwort auf die Auslöseoperation auf dem zweiten Knoten in der Knotenliste; und in einem Fall, in dem als Antwort auf das Ermitteln, dass der Cursor sich zu einem Anzeigebereich eines Eingangsverbindungspunkts des ersten Knotens bewegt, das Listensteuerelement des ersten Knotens angezeigt wird, und als Antwort auf die Auslöseoperation, die auf das Listensteuerelement des ersten Knotens wirkt, die Knotenliste angezeigt wird: Hinzufügen des zweiten Knotens zwischen dem ersten Knoten und einem Knoten, dessen Ausgangsverbindungspunkt mit dem Eingangsverbindungspunkt des ersten Knotens verbunden ist, als Antwort auf die Auslöseoperation auf dem zweiten Knoten in der Knotenliste;
Verarbeiten (S302) des zu verarbeitenden Bildes durch Verwenden des Zieleffekts; und
als Antwort darauf, dass die Verarbeitung abgeschlossen ist, und gemäß einer Anordnungsreihenfolge einer Vielzahl von Knoten in den Zielrequisit-Ablaufinformationen erfolgendes Senden (S303, S409) eines Rendering-Anweisungspakets an eine Grafikverarbeitungseinheit (GPU), um die GPU anzuweisen, ein Ausgabebild jedes Knotens zu rendern und ein verarbeitetes Zielbild zu erhalten, wobei das Rendering-Anweisungspaket Rendering-Anweisungen der Vielzahl von Knoten umfasst.

7. Verfahren nach Anspruch 6, wobei das Verarbeiten des zu verarbeitenden Bildes durch Verwenden des Zieleffekts umfasst:
Steuern (S402) eines aktuellen Knotens, damit er Eingabebildinformationen für jeden Knoten in den Zielrequisit-Ablaufinformationen empfängt;
Steuern (S407) des aktuellen Knotens, damit er die Eingangsbildinformationen durch Verwenden mindestens eines Zielverarbeitungsplatzes verarbeitet, um dadurch mindestens ein Stück von Ausgabe-Bildinformationen zu erhalten, wobei jeder des mindestens einen Zielverarbeitungsplatzes ein belegter Speicherplatz ist, wenn der aktuelle Knoten die Eingangsbildinformationen verarbeitet; und
Steuern (S408) des aktuellen Knotens, damit er das mindestens eine Stück von Ausgabe-Bildinformationen ausgibt.

8. Verfahren nach Anspruch 7, wobei, bevor der aktuelle Knoten so gesteuert wird, dass er die Eingangsbildinformationen durch Verwenden des Zielverarbeitungsplatzes verarbeitet, das Verfahren umfasst:
Steuern (S403) des aktuellen Knotens, sodass er einen Zieltyp eines jeden des mindestens einen Zielverarbeitungsplatzes und eine Zielanzahl des mindestens einen Zielverarbeitungsplatzes bestimmt;
Steuern (S404) des aktuellen Knotens, sodass er mindestens einen freien Verarbeitungsplatz bestimmt, der sich unter vorhandenen Verarbeitungsräumen befindet und dessen Platztyp mit dem Zieltyp übereinstimmt, wobei die vorhandenen Verarbeitungsräume Verarbeitungsräume sind, die durch die Vielzahl von Knoten in den Zielrequisit-Ablaufinformationen beantragt wurden; wobei:
als Antwort darauf, dass eine Platzanzahl des mindestens einen freien Verarbeitungsplatzes größer als die oder gleich der Zielanzahl ist, Steuern (S405) des aktuellen Knotens, sodass er eine Zielanzahl von freien Verarbeitungsräumen ermittelt und die freien Verarbeitungsräume als den mindestens einen Zielverarbeitungsplatz des aktuellen Knotens nimmt; und
falls die Platzanzahl des mindestens einen freien Verarbeitungsplatzes kleiner als die Zielanzahl ist, Steuern (S406) des aktuellen Knotens, sodass er die Platzanzahl des mindestens einen freien Verarbeitungsplatzes erlangt, den mindestens einen freien Verarbeitungsplatz als Teil des mindestens einen Ziel-Verarbeitungsplatzes des aktuellen Knotens nimmt und bei der GPU einen verbleibenden Teil des mindestens einen Ziel-Verarbeitungsplatzes entsprechend dem Zieltyp und einer Differenz zwischen der Zielanzahl und der Platzanzahl beantragt.

9. Elektronische Vorrichtung, umfassend:
mindestens einen Prozessor; und
einen Speicher, der dafür konfiguriert ist, mindestens ein Programm zu speichern;
wobei das mindestens eine Programm durch den mindestens einen Prozessor ausgeführt wird, um zu bewirken, dass der mindestens eine Prozessor das Verfahren zum Erzeugen eines Effekts nach einem der Ansprüche 1 bis 5 oder das Verfahren zum Verarbeiten eines Bildes nach einem der Ansprüche 6 bis 8 durchführt.

10. Computerlesbares Speichermedium, auf dem ein Computerprogramm gespeichert ist, wobei das Computerprogramm durch einen Prozessor ausgeführt wird, um zu bewirken, dass der mindestens eine Prozessor das Verfahren zum Erzeugen eines Effekts nach einem der Ansprüche 1 bis 5 oder das Verfahren zum Verarbeiten eines Bildes nach einem der Ansprüche 6 bis 8 durchführt.

11. Computerprogrammprodukt, wobei das Computerprogrammprodukt, wenn es durch einen Computer ausgeführt wird, bewirkt, dass der Computer das Verfahren zum Erzeugen eines Effekts nach einem der Ansprüche 1 bis 5 oder das Verfahren zum Verarbeiten eines Bildes nach einem der Ansprüche 6 bis 8 durchführt.

## Revendications

1. Procédé de génération d'un effet, comprenant :
l'affichage (S101, S201) d'une page d'édition d'effet et l'acquisition d'une première image, dans laquelle la page d'édition d'effet est dotée d'une zone d'affichage d'informations de flux et d'une zone d'affichage d'effet, dans laquelle la zone d'affichage d'informations de flux est utilisée pour afficher les informations de flux d'un accessoire à éditer, et la zone d'affichage d'effet est utilisée pour afficher une seconde image, dans laquelle la seconde image est une image d'aperçu obtenue en traitant la première image en fonction des informations de flux de l'accessoire à éditer ;
en réponse à une opération d'édition, l'édition (S102) d'informations de flux de l'accessoire à éditer et la mise à jour (S102, S208) de la seconde image affichée dans la zone d'affichage d'effet; et
en réponse à une opération de génération d'effet, la génération (S103, S209) d'un effet cible en fonction d'informations de flux d'accessoire cible éditées ;
dans lequel les informations de flux de l'accessoire à éditer sont présentées sous la forme d'un organigramme, dans lequel au moins deux nœuds sont fournis dans l'organigramme, et chacun des au moins deux nœuds présente au moins un point parmi : un point de connexion d'entrée ou un point de connexion de sortie ;
dans lequel, en réponse à l'opération d'édition, l'édition des informations de flux de l'accessoire à éditer comprend : l'affichage (S202) d'une liste de nœuds en réponse à une opération d'ajout de nœud agissant sur un premier nœud dans les informations de flux de l'accessoire à éditer, et en réponse à une opération de déclenchement sur un deuxième nœud dans la liste de nœuds, l'ajout (S203) du deuxième nœud entre le premier nœud et un troisième nœud, dans lequel le troisième nœud est un nœud adjacent au premier nœud ;
dans lequel l'affichage (S202) de la liste de nœuds en réponse à l'opération d'ajout de nœud agissant sur le premier nœud dans les informations de flux de l'accessoire à éditer, et en réponse à l'opération de déclenchement sur le deuxième nœud dans la liste des nœuds, l'ajout (S203) du deuxième nœud entre le premier nœud et le troisième nœud, comprend :
dans le cas où une commande de liste du premier nœud est affichée en réponse à la détection du déplacement d'un curseur vers une zone d'affichage d'un point de connexion de sortie du premier nœud, et la liste de nœuds est affichée en réponse à une opération de déclenchement agissant sur la commande de liste du premier nœud, l'ajout du deuxième nœud entre le premier nœud et un nœud dont le point de connexion d'entrée est connecté au point de connexion de sortie du premier nœud, en réponse à l'opération de déclenchement sur le deuxième nœud dans la liste de nœuds ;
dans le cas où la commande de liste du premier nœud est affichée en réponse à la détection du déplacement du curseur vers une zone d'affichage d'un point de connexion d'entrée du premier nœud, et la liste de nœuds est affichée en réponse à l'opération de déclenchement agissant sur la commande de liste du premier nœud, l'ajout du deuxième nœud entre le premier nœud et un nœud dont le point de connexion de sortie est connecté au point de connexion d'entrée du premier nœud en réponse à l'opération de déclenchement sur le deuxième nœud dans la liste de nœuds.

2. Procédé selon la revendication 1, comprenant en outre au moins un parmi :
l'affichage d'une image d'entrée de tout point de connexion d'entrée en réponse à la détection du déplacement du curseur vers une zone d'affichage dudit tout point de connexion d'entrée ; ou
l'affichage d'une image de sortie de tout point de connexion de sortie en réponse à la détection du déplacement du curseur vers une zone d'affichage dudit tout point de connexion de sortie.

3. Procédé selon la revendication 1, dans lequel, en réponse à l'opération d'édition, l'édition des informations de flux de l'accessoire à éditer comprend au moins un parmi :
en réponse à une première opération de glissement, la commande (S204) d'un point d'extrémité d'un segment de ligne de connexion au niveau d'un point de connexion d'entrée cible pour se déplacer avec la première opération de glissement jusqu'à la fin de la première opération de glissement, dans laquelle la première opération de glissement commence à partir du point de connexion d'entrée cible ; ou
en réponse à une seconde opération de glissement, le tracé (S204) d'un nouveau segment de ligne de connexion avec un point de connexion de sortie cible comme point initial et la commande d'un point terminal du nouveau segment de ligne de connexion pour se déplacer avec la seconde opération de glissement jusqu'à la fin de la seconde opération de glissement, dans laquelle la seconde opération de glissement commence à partir du point de connexion de sortie cible ; ou
l'affichage (S206) d'informations de configuration d'un quatrième nœud en réponse à une opération d'affichage d'informations de configuration du quatrième nœud dans les informations de flux de l'accessoire à éditer ; et l'affichage (S207) d'informations de configuration modifiées en réponse à une opération de modification d'informations de configuration.

4. Procédé selon la revendication 3, dans lequel,
l'opération d'affichage d'informations de configuration comprend une opération de clic gauche de la souris pour le quatrième nœud ; ou
l'opération d'affichage d'informations de configuration comprend une opération de déclenchement agissant sur une commande de configuration du quatrième nœud, et avant que les informations de configuration du quatrième nœud ne soient affichées en réponse à l'opération d'affichage d'informations de configuration du quatrième nœud dans les informations de flux de l'accessoire à éditer, le procédé comprend en outre : l'affichage de la commande de configuration du quatrième nœud en réponse à une opération de clic gauche de la souris pour le quatrième nœud.

5. Procédé selon la revendication 1, dans lequel, après la génération de l'effet cible en fonction des informations de flux d'accessoire cible éditées, le procédé comprend en outre :
le téléchargement (S210) de l'effet cible sur un serveur pour publication en réponse à une opération de publication pour l'effet cible.

6. Procédé de traitement d'une image, comprenant :
l'acquisition (S301, S401) d'une image à traiter et d'informations de flux d'accessoire cible d'un effet cible, dans lesquelles les informations de flux d'accessoire cible sont obtenues en éditant des informations de flux d'un accessoire à éditer dans une page d'édition d'effet de la manière suivante : ajout d'un deuxième nœud entre un premier et un troisième nœud en réponse à une opération de déclenchement sur le deuxième nœud dans une liste de nœuds, dans lequel le troisième nœud est un nœud adjacent au premier nœud, dans lequel les informations de flux de l'accessoire à éditer sont présentées sous forme d'organigramme, au moins deux nœuds étant fournis dans l'organigramme, et chacun des au moins deux nœuds présente un point de connexion d'entrée et/ou un point de connexion de sortie, dans lequel, lors d'un processus d'édition, la page d'édition d'effet affiche une seconde image obtenue en traitant une première image en fonction des informations de flux de l'accessoire à éditer, et dans lequel l'ajout du deuxième nœud entre le premier nœud et le troisième nœud en réponse à l'opération de déclenchement sur le deuxième nœud dans la liste de nœuds comprend : dans le cas où une commande de liste du premier nœud est affichée en réponse à la détection du déplacement d'un curseur vers une zone d'affichage d'un point de connexion de sortie du premier nœud et la liste de nœuds est affichée en réponse à une opération de déclenchement agissant sur la commande de liste du premier nœud, l'ajout du deuxième nœud entre le premier nœud et un nœud dont le point de connexion d'entrée est connecté au point de connexion de sortie du premier nœud en réponse à l'opération de déclenchement sur le deuxième nœud dans la liste de nœuds, et dans le cas où la commande de liste du premier nœud est affichée en réponse à la détection du déplacement du curseur vers une zone d'affichage d'un point de connexion d'entrée du premier nœud et la liste de nœuds est affichée en réponse à l'opération de déclenchement agissant sur la commande de liste du premier nœud, l'ajout du deuxième nœud entre le premier nœud et un nœud dont le point de connexion de sortie est connecté au point de connexion d'entrée du premier nœud en réponse à l'opération de déclenchement sur le deuxième nœud dans la liste de nœuds ;
le traitement (S302) de l'image à traiter en utilisant l'effet cible ; et
en réponse à la fin du traitement et en fonction d'un ordre d'agencement d'une pluralité de nœuds dans les informations de flux d'accessoire cible, l'envoi (S303, S409) d'un paquet d'instructions de rendu à une unité de traitement graphique (GPU) pour indiquer à la GPU de restituer une image de sortie de chaque nœud et d'obtenir une image cible traitée, dans lequel le paquet d'instructions de rendu comprend des instructions de rendu de la pluralité de nœuds.

7. Procédé selon la revendication 6, dans lequel le traitement de l'image à traiter en utilisant l'effet cible comprend :
la commande (S402) d'un nœud courant pour recevoir des informations d'image d'entrée pour chaque nœud dans les informations de flux d'accessoire cible ;
la commande (S407) du nœud courant pour traiter les informations d'image d'entrée en utilisant au moins un espace de traitement cible, afin d'obtenir au moins un élément d'information d'image de sortie, dans lequel chacun parmi l'au moins un espace de traitement cible est un espace mémoire occupé lorsque le nœud courant traite les informations d'image d'entrée ; et
la commande (S408) du nœud courant pour émettre l'au moins un élément d'information d'image de sortie.

8. Procédé selon la revendication 7, dans lequel, avant que le nœud courant ne soit commandé pour traiter les informations d'image d'entrée en utilisant l'espace de traitement cible, le procédé comprend :
la commande (S403) du nœud courant pour déterminer un type cible de chacun parmi l'au moins un espace de traitement cible et un numéro cible parmi l'au moins un espace de traitement cible ;
la commande (S404) du nœud courant pour déterminer au moins un espace de traitement libre parmi les espaces de traitement existants et dont le type d'espace correspond au type cible, dans lequel les espaces de traitement existants sont des espaces de traitement demandés par la pluralité de nœuds dans les informations de flux d'accessoire cible ; dans lequel
en réponse à un nombre d'espaces de l'au moins un espace de traitement libres étant supérieur ou égal au nombre cible, la commande (S405) du nœud courant pour acquérir un nombre cible d'espaces de traitement libres et prendre les espaces de traitement libres comme l'au moins un espace de traitement cible du nœud courant ; et
dans le cas où le nombre d'espaces de l'au moins un espace de traitement libre est inférieur au nombre cible, la commande (S406) du nœud courant pour acquérir le nombre d'espaces de l'au moins un espace de traitement libre, prendre l'au moins un espace de traitement libre comme partie de l'au moins un espace de traitement cible du nœud courant et demander à la GPU la partie restante de l'au moins un espace de traitement cible en fonction du type cible et de la différence entre le nombre cible et le nombre d'espaces.

9. Dispositif électronique, comprenant :
au moins un processeur ; et
une mémoire configurée pour stocker au moins un programme ;
dans lequel l'au moins un programme est exécuté par l'au moins un processeur pour amener l'au moins un processeur à réaliser le procédé de génération d'un effet selon l'une quelconque des revendications 1 à 5 ou le procédé de traitement d'une image selon l'une quelconque des revendications 6 à 8.

10. Support de stockage lisible par ordinateur sur lequel un programme informatique est stocké, dans lequel le programme informatique est exécuté par un processeur pour amener le processeur à réaliser le procédé de génération d'un effet selon l'une quelconque des revendications 1 à 5 ou le procédé de traitement d'une image selon l'une quelconque des revendications 6 à 8.

11. Produit de programme informatique, dans lequel le produit de programme informatique, lorsqu'il est exécuté par un ordinateur, amène l'ordinateur à réaliser le procédé de génération d'un effet selon l'une quelconque des revendications 1 à 5 ou le procédé de traitement d'une image selon l'une quelconque des revendications 6 à 8.
